(19) **Europäisches Patentamt**

**European Patent Office**

**Office européen des brevets**

(11) **EP 1 439 121 B1**

(12) **EUROPÄISCHE PATENTSCHRIFT**

(45) Veröffentlichungstag und Bekanntmachung des Hinweises auf die Patenterteilung:
**25.10.2006 Patentblatt 2006/43**

(51) Int Cl.:
**B64C 1/12** *(2006.01)* **B64C 1/00** *(2006.01)*

(21) Anmeldenummer: **04000743.7**

(22) Anmeldetag: **15.01.2004**

(54) **Leichtbau-Strukturbauteil insbesondere für Flugzeuge und Verfahren zu seiner Herstellung**

Lightweight structure for aircraft and its method of production

Structure pour aéronef et procédé pour sa fabrication

(84) Benannte Vertragsstaaten:
**AT BE BG CH CY CZ DE DK EE ES FI FR GB GR HU IE IT LI LU MC NL PT RO SE SI SK TR**

(30) Priorität: **16.01.2003 DE 10301445**

(43) Veröffentlichungstag der Anmeldung:
**21.07.2004 Patentblatt 2004/30**

(73) Patentinhaber:
- **Fraunhofer-Gesellschaft zur Förderung der angewandten Forschung e.V.
80686 München (DE)**
- **Airbus Deutschland GmbH
21129 Hamburg (DE)**

(72) Erfinder:
- **Brenner, Berndt
01328 Dresden (DE)**
- **Winderlich, Bernd
01217 Dresden (DE)**

- **Standfuss, Jens
01796 Pirna (DE)**
- **Schumacher, Jörg
27308 Kirchlinteln (DE)**
- **Brenneis, Hartmut
21709 Düdenbüttel (DE)**
- **Zink, Walter
28357 Bremen (DE)**

(56) Entgegenhaltungen:
DE-A- 2 642 523     US-A- 3 025 208
US-A- 4 113 910     US-A- 4 331 723

- **ERITT J: "LASERSTRAHLSCHWEISSEN HOCHFESTER ALUMINIUMLEGIERUNGEN IM FLUGZEUGBAU" , VDI Z, VDI VERLAG GMBH. DUSSELDORF, DE, VOL. 137, NR. 6, PAGE(S) 34-38 XP000508365 ISSN: 0042-1766 * Seite 35, linke Spalte, Absatz 2 - Seite 35, rechte Spalte, Absatz 1; Abbildungen ***

EP 1 439 121 B1

## Beschreibung

Die Erfindung bezieht sich auf die Auslegung und Herstellung von metallischen Leichtbau-Strukturbauteilen. Objekte, bei denen ihre Anwendung zweckmäßig und möglich ist, sind alle metallischen großvolumigen Leichtbaustrukturen, bei denen ein wesentlicher Teil der Lastaufnahme als Flächenlast über Hautbleche erfolgt und die zur Lastverteilung, Lastableitung, Verminderung der Durchbiegung oder Verhinderung der Ausbeulung oder Ausknickung mit Versteifungselementen versehen sind. Typischerweise sind solche Beanspruchungsfälle besonders ausgeprägt in vielen Leichtbaustrukturen, die neben der Strukturbelastung mit einer Druckdifferenz zwischen der Außen- und der Innenseite des Hautbleches beaufschlagt sind. Besonders vorteilhaft ist die Erfindung für Flugzeugstrukturen, insbesondere für Rumpfstrukturen, aber auch Tragflächenstrukturen, Triebwerkseinläufe, Druckschotts, Fahrwerkschachtabdeckungen usw. einsetzbar. Weitere Einsatzfelder bestehen in Flüssigkeits- oder Gastanks, Druck- oder Vakuumbehältern, Bauteilen von Raketen und Raketentriebwerken sowie Rumpfstrukturen von Leichtbau-Wasserfahrzeugen.

Ohne die Einschränkung der Allgemeinheit soll der Stand der Technik und der Hintergrund der Erfindung beispielhaft am Aufbau von Flugzeugrumpfstrukturen erläutert werden. Üblicherweise sind Flugzeugrümpfe aus zusammengenieteten Hautfeldern hergestellt, die durch aufgenietete Versteifungselemente -jeweils längs der Rumpfröhre verlaufende Stringer und in Umfangsrichtung verlaufende Spanten - verstärkt werden. Typischerweise besteht ein Stringer aus einem geeignet ausgeformten Stringerkopf, einem Stringersteg und einem auf einem Hautfeldsockel aufliegenden, um 90° gegenüber dem Stringersteg abgewinkelten Stringersockel, der mit dem Hautfeldsockel vernietet wird.

Die Beanspruchung der Hautfeld-Versteifungselement-Struktur ist wegen der verschiedenen Lasteinleitungen und den von sehr vielen Parametern abhängenden statischen und zyklischen Lasten sehr komplex. Bei der Auslegung solcherart aufgebauter Flugzeugrümpfe müssen vorgegebene statische Festigkeitsanforderungen eingehalten, Dauerfestigkeiten berücksichtigt und die Sicherheit gegenüber verschiedenen vorgegebenen kritischen Versagensszenarien gewährleistet werden. In der Ausführung des Flugzeugrumpfes als genietete Struktur wird diesen Anforderungen durch die orts- und belastungsabhängige Wahl der Dicke von Hautfeld, Stringer, Spanten, der Form und dem Abstand von Stringern bzw. Spanten, der Abmaße von Hautfeldsockel und Nieten sowie Nietabstand u. v. a. m. Rechnung getragen. Nachteilig wirkt sich bei der Auslegung der konventionell genieteten Struktur aus, dass die bauweisenbezogenen Gewichtseinsparungspotenziale weitgehend erschöpft sind und die Herstellung einer solchen Differenzialstruktur durch die begrenzte Nietgeschwindigkeit zu aufwändig und zu dem kaum noch qualitativ verbesserungsfähig ist.

Bekannt ist [siehe P. Heider: "Lasergerechte Konstruktion und lasergerechte Fertigungsmittel zum Schweißen großformatiger Aluminium-Strukturbauteile", in: VDI-Fortschrittsberichte, Reihe 2: Fertigungstechnik, Nr. 326, VDI-Verlag Düsseldorf (1994)], das Nieten durch ein beidseitig gleichzeitiges Verschweißen des Stringerfußes mit dem Hautfeldsockel mittels zweier Laser zu ersetzen. Um diese Verbindung mit einer ausreichend guten Ausbildung der Schweißnahtwurzel und porenarm zu realisieren, ist es erforderlich, dass beide Laserstrahlen ein gemeinsames Schmelzbad erzeugen. Das wird erreicht, indem beide Laserstrahlen, sich gegenüberliegend, auf identische Positionen in Bezug zum Fügestoß fokussiert werden. Heißrisse werden dabei durch die Verwendung von geeigneten drahtförmigen Schweißzusatzwerkstoffen, wie z. B. Draht der Legierung AlSi12, vermieden. Durch die sehr geringe Streckenenergie des Verfahrens und den zum Stringer symmetrischen Energieeintrag wird der Verzug begrenzt.

In einer weiteren Ausbildung dieses Prinzips ist der Aufbau komplett geschweißter Schalenbauteile, einschließlich Stringer, Spanten, Clips, Verteilungsgurten und Spantköpfen möglich [siehe: P. Brinck etal.: "Schalenbauteil für ein Flugzeug und Verfahren zur Herstellung", PS DE 198 44 035 C1].

Trotz der gegenüber einer Nietverbindung besseren statischen Festigkeit und höheren Steifigkeit besteht der Nachteil einer solcherart hergestellten Verbindung in ihrer schlechteren Schadenstoleranz, was sich z. B. in einer höheren Rissfortschrittsgeschwindigkeit eines Umfangrisses nach Durchschreitung des Stringers sowie einer geringeren Restfestigkeit äußert. Die Ursache dafür besteht darin, dass sich ein Riss beim Erreichen eines angeschweißten Versteifungselementes in dieses hinein ausbreitet. Während bei einer konventionellen Differenzialbauweise durch die aufgenieteten oder aufgeklebten Versteifungen, wie Stringer oder Spante, der Rissfortschritt in der Rumpfbeplankung verzögert wird, da die Rissspitze sich für eine bestimmte Anzahl von Lastwechseln nicht in die Versteifungselemente ausbreitet und zudem durch die intakte Versteifung zusammen gehalten wird, setzt sich der Riss bei den angeschweißten Versteifungselementen gleichzeitig in der Beplankung und dem Versteifungselement fort, ohne dass eine merkliche rissverzögernde Wirkung auftritt. Dadurch ist der gewichtssparende Einsatz laserstrahlgeschweißter . Rumpfschalen nur für Rumpfbereiche möglich, für die nicht die

Auslegungskriterien für Schadenstoleranz erfüllt werden müssen, d. h. nur für die Unterschalen des Rumpfes.

Die Ursache dieses Mangels liegt darin, dass die bekannte integrale Ausführung der Anbindung der Versteifungselemente keine ausreichenden geometrischen, belastungsmäßigen oder mikrostrukturellen Möglichkeiten für einen Rissstopp, eine schädigungsärmere Rissverzweigung oder eine Energiedissipation in Rissspitzennähe bietet. Dadurch kann sich der Riss ungehindert in die Versteifungselemente ausbreiten.

Ein weiterer Mangel liegt darin, dass die Kopfzugfestigkeit einer beidseitig gleichzeitig laserstrahlgeschweißten Stringer-Hautfeld-Anbindung mit zunehmender Schweißnahttiefe d. h. mit zunehmender Stringerdicke abnimmt.

Die Ursache dafür liegt u. a. darin, dass zur Erzeugung größerer Schweißnahttiefen die Schweißparameter so geändert werden müssen, dass eine größere Streckenenergie und ungünstigere Verhältnisse von Drahtfördergeschwindigkeit des Schweißzusatzwerkstoffes zu Schweißgeschwindigkeit gewählt werden müssen. Beides führt zusammen mit festkörpermechanischen Einflüssen zu einem größeren under-matching in der Schweißzone, einem breiteren überalterten Bereich in der Wärmeeinflusszone und zu einer verstärkten Gefahr der Bildung von Mikroheißrissen.

Zur Verbesserung des Rissfortschrittverhaltens von Schalenbauteilen mit angeschweißten Versteifungselementen ist bekannt geworden [siehe F. Palm: "Metallisches Schalenbauteil", PS DE 199 24 909 C1], den Steg des Versteifungselementes in der Nähe der Schweißzone aufzudicken, ohne die Anbindungstiefe der beidseitig gleichzeitig ausgeführten Laserstrahlschweißnaht zu erhöhen. In weiteren Ausbildungen der Erfindung wird eine reduzierte Schweißnahttiefe oder das Einbringen von Einkerbungen zwischen Schweißnaht und Aufdickung ausgeführt. Alle drei Maßnahmen haben das Ziel, das Fortschreiten eines Risses in Richtung Stringerkopf zu erschweren. U. U. kann der Riss abgelenkt werden und eine gewisse Distanz in der Schweißnaht oder entlang der Schweißnaht laufen.

Nachteilig wirkt sich bei dieser Lösung aus, dass diese Ausführung nur auf den Belastungsfall Two-Bay-Crack, d. h. das Ertragen eines Längs- oder Umfangrisses über zwei Spantabschnitte oder Stringerteilungen hinweg zugeschnitten ist. Sowohl für den Belastungsfall "Zug in Richtung Kopf des Versteifungselementes" wie er im unteren Rumpfbereich und für Spanten auftritt, als auch für die kombinierten Belastungsfälle "Biegung mit Biegepfeil quer zum Versteifungselement" und "Zug in Richtung Kopf des Versteifungselementes", wie er im Schub-Druck belasteten Bereichen des Rumpfes vorkommt, führt die vorgeschlagene Lösung zu einer Verringerung der ertragbaren Belastungen bzw. zu einem vorzeitigen Stringer- oder Spantabriss.

Die Ursache des Mangels liegt darin, dass den beiden Nachteilen einer integral geschweißten Struktur - das Fehlen eines effektiven Mechanismus zur Rissverzögerung und die lokal erhöhte Rissfortschrittsgeschwindigkeit in der Schweißnaht - nur mit nachteiligen Konsequenzen hinsichtlich der Belastbarkeit für andere Beanspruchungsfälle bzw. gar nicht begegnet wird.

Eine Ausbildung einer geschweißten Anordnung von Hautfeld und Verstärkungselementen, die eine Erhöhung der Restfestigkeit erreicht und somit auch den Einsatz von geschweißten Rumpfschalen für den Seiten- und Oberschalenbereich des Rumpfes ermöglichen soll, ist durch H. J. Schmidt [PS DE 100 31 510 A1] bekannt geworden. Dazu werden vor dem Laserstahlschweißen Verstärkungen an den Versteifungselementen angebracht. Die Verstärkungen können dabei als Doppler oder als Zugbänder angeordnet sein.

Die Doppler bestehen aus hochfesten Al-Legierungen oder faserverstärkten Metall-Laminaten und werden durch eine Nietverbindung oder eine Klebeverbindung aufgebracht. Die Doppler müssen damit einen ausreichenden, durch das Temperaturfeld des Schweißvorganges bestimmten Abstand zur Schweißnaht haben. Die Zugbänder bestehen aus hochfesten Stahl- bzw. Titanlegierungen oder Faserverbundwerkstoffen und werden in vorher einzubringende Durchgangsbohrungen eingebracht und verdrillt. Zur Aufnahme der Durchgangsbohrungen sind Querschnittsverstärkungen im unteren Stegbereich des Versteifungselementes vorgesehen. Eine weitere Variante sieht vor, den unteren Stegbereich geschlitzt auszuführen, das Zugband durch eine Aufnahmeöffnung in den geschlitzten unteren Stegbereich einzuführen und das eingebrachte Zugband durch ein Zusammenpressen des geschlitzten Stegbereiches formschlüssig mit dem Zugband zu verbinden und anschließend in bekannter Art und Weise durch Laserstrahlschweißen mit dem Hautblech zu verbinden.

Durch die rissverzögernde Wirkung der Verstärkungen wird eine Erhöhung der Restfestigkeit erreicht. Das geschieht dadurch, dass die Zahl der nötigen Lastwechsel zum vollständigen Durchtrennen des Versteifungselementes erhöht wird und das Verstärkungselement erst später als das Versteifungselement versagt. Durch letzteren Einfluss kann das Verstärkungselement für den Zeitraum zwischen dem Versagen des Versteifungselementes und dem Versagen des Verstärkungselementes den Rissöffnungswinkel verkleinern und die Spannungen an der Rissspitze reduzieren.

Die Ausbildung der Schweißnaht selbst wird gegenüber dem vorher bekannten Stand der Technik nicht verändert. D. h. der Stringer- oder Spantfuß wird über seine gesamte Breite durch eine einzige Schweißnaht an das Hautblech angebunden, wobei die Schweißnaht durch beidseitig gleichzeitiges Laserstrahlschweißen erzeugt wird.

Ein Mangel der Anordnung besteht darin, dass sie nicht geeignet ist, den Stand der Technik hinsichtlich der beiden kritischen Belastungsfälle "Zug in Richtung Kopf des Versteifungselementes" und "Biegung in Richtung quer zum Versteifungselement" zu verbessern. Deshalb bleibt die Gefahr des statischen Versagens infolge der Ablösung des Versteifungselementes vom Hautfeld insbesondere bei Schub-Druck-Belastung in den Seitenschalen bestehen.

Die Ursache dafür besteht darin, dass durch die nicht geänderte Schweißnahtanordnung und -umgebung keine größeren Kopfzug- oder Biegebelastungen quer zur Längsrichtungen der Versteifungselemente ertragen werden können.

Darüber hinaus wirkt sich nachteilig aus, dass die Verstärkungen der Versteifungselemente nicht die lokale Rissfortschrittsgeschwindigkeit in der Schweißnaht und deren unmittelbaren Umgebung reduzieren. Das gilt insbesondere für Belastungsfälle, wie z. B. Schub-Druck-Belastung, bei denen die Gefahr einer Rissausbreitung längs der Schweißnaht besteht.

Die Ursache dafür besteht darin, dass sie verfahrens- und anordnungsbedingt in einem Abstand zur Schweißnaht angebracht werden müssen, in dem ihre Wirkung auf eine Spannungsentlastung der Schweißnaht sehr gering ist.

Ein weiterer Mangel besteht darin, dass die Verstärkungselemente nicht wirtschaftlich an den Versteifungselementen auf- oder eingebracht werden können.

Die Ursache dafür liegt darin, dass zum Aufbringen der Verstärkungen zusätzliche Arbeitsschritte, wie z. B. das Aufnieten der Doppler, das Aufkleben der Doppler oder das Bohren der sehr langen Durchgangsbohrungen nötig sind, die selbst sehr aufwändig bzw. zum Teil sogar aufwändiger sind, als das zu ersetzende Vernieten der Versteifungselemente mit dem Hautfeld.

Weiterhin wirkt sich nachteilig aus, dass die Variante mit eingelegten Zugbändern nicht für Spanten geeignet ist. Ursächlich liegt das in der Unmöglichkeit begründet, ein gekrümmtes Langloch zu bohren oder die beiden Schenkel des geschlitzten unteren Stegbereiches nach dem Einlegen des Zugbandes plastisch ohne Werkstoffschädigung oder verbleibenden Verzug des gesamten Versteifungselementes zusammenzubiegen.

Von der Auslegung von Flugzeugstrukturen aus Faserverbundwerkstoffen, die einer völlig anderen, die Fertigungs- und Werkstoffbesonderheiten berücksichtigenden Konstruktionsphilosophie folgt, ist bekannt (DE 26 42523), Flugzeugbauteile in profilverstärkender Schalenbauweise aus faserverstärkten Kunststoffen dergestalt herzustellen, dass die Schale auf der Innenseite eine Vielzahl von Versteifungsrippen oder Stegen aufweist, die voneinander einen Abstand besitzen und die Versteifungsrippen oder Stege hohl sind. Das Laminat, das diese Rippen oder Stege bildet, wird dazu in eine Innenform gelegt, in die die Negative der Versteifungsrippen oder Stege eingearbeitet sind und ausgehärtet. Das Laminat kann sich dabei über eine Rippe bzw. einen Steg oder mehrere Rippen bzw. Stege erstrecken. Durch das großflächige Verkleben der so entstandenen Innenform mit der Schale entstehen Versteifungselemente, die einen Hohlraum aufweisen und die auf beiden Seiten mit der Schale großflächig verklebt sind. In einer Fortbildung dieser technischen Lösung (US 4331723) werden in den so entstandenen Hohlräumen Verstärkungselemente angeordnet, die eine keilförmige Gestalt haben und an ihrer hautseitigen Basis in zwei Radien auslaufen. Sie bestehen aus einem Verstärkungskern, der an seinen drei Oberflächen mit Laminat verklebt wird, wobei die Laminate zusätzlich mit hochfesten Kevlar-Fäden vernäht werden. Anschließend wird das gesamte Bauteil mit dem die Stege und Köpfe des Verstärkungselementes bildenden Laminat verklebt. Durch große Übergangsradien zwischen Versteifungselement und der Hautschale wird die als Schälkraft auf die Haut wirkende Spannung verringert und so die Belastbarkeit der Strukturen erhöht.

Ein Mangel beider Varianten besteht darin, dass die Fertigungskosten für Flugzeugstrukturen aus Faserverbundwerkstoffen größer sind, als für metallische Strukturen. Ein weiterer Nachteil besteht darin, dass beide Auslegungen spezifisch für Faserverbund-Bauweisen sind und nicht auf eine metallische Flugzeugstruktur übertragen werden können.

Für metallische Flugzeugstrukturen sind als Fügeverfahren außer dem oben erwähnten Nieten bzw. Laserstrahlschweißen noch das Kleben (z. B. US 2650185; US 3025208), das Löten und das Diffusionsschweißen in Kombination mit dem Streckziehen bekannt (US 4549685). Außer für das Laserstrahlschweißen ist für alle anderen aufgeführten Fügeverfahren charakteristisch, dass sie eine sehr formgenaue und großflächige Auflagefläche zwischen Hautfeld und Verstärkungselement benötigen, deren Breite sehr viel größer ist als die Stegdicke des Versteifungselementes. Wie allgemein bekannt, werden dazu die Versteifungselemente als T-, L-,I-, Y- bzw. Hutprofil oder pyramidenförmig ausgebildet, wobei die Verbindung zum Hautfeld durch abgewinkelte, sich ein- oder beidseitig erstreckende breite Flansche, die mit ihrer Breitseite auf dem Hautblech aufliegen und die eine sehr breite Auflagefläche gewährleisten, hergestellt wird (siehe z. B. US 2650185, US 3025208, US 4549685) und die durch Kleben, Diffusionsschweißen oder Löten mit dem Hautfeld gefügt werden.

Abgesehen davon, dass diese Verfahren recht aufwändig sind, weil sie eine sehr genaue Passform und eine Vordeponierung der Klebstoffträgerfolie bzw. des Klebstoffes (Kleben) und eine längere Wärmebehandlung in einer aufwändigen Negativform (Kleben, Diffusionsschweißen) erfordern, besteht der entscheidende Nachteil darin, dass eine solche Konstruktion wegen des zusätzlichen Materials für die die Auflagefläche bildenden breiten Flansche, zu schwer ist.

Ein weiterer Nachteil besteht darin, dass diese Versteifungselemente wegen ihrer breiten Auflageflächen nur schlecht für zweidimensional gekrümmte Hautbleche eingesetzt werden können. Als Lösung wird durch WO-A 02/098 733 ein Versteifungselement vorgeschlagen, das Aussparungen in dem Flansch aufweist, die sich im Steg bis zum Kopf des Versteifungselementes fortsetzen. Nachteilig wirkt sich bei dieser Lösung aus, dass sie nicht für höhere Anforderungen an die Biegesteifigkeit, Schub-Druck-Belastung und Kopfzugfestigkeit geeignet ist.

Das Ziel der Erfindung ist es, ein neuartiges metallisches Leichtbau-Strukturbauteil insbesondere für Flugzeuge und ein Verfahren zu seiner effektiven und kostenreduzierten Herstellung anzugeben, dass auch für komplexe Belastungsfälle geeignet ist, sowohl für geradlinige als auch gebogene Versteifungselemente anwendbar ist, eine verbesserte Schadenstoleranz, Kopfzugfestigkeit, Schub-Druck-Belastbarkeit und Biegesteifigkeit aufweist, auch bei dickeren Versteifungselementen nutzbar ist und ohne aufwändige zusätzliche separate Arbeitsschritte auskommt.

Der Erfindung liegt die Aufgabe zu Grunde, ein metallisches Leichtbau-Strukturbauteil anzugeben, das trotz integraler Ausführung ein differenzielles Versagensverhalten aufweist, das zu reduzierten Belastungsspannungen und -dehnungen in der Fügezone und deren unmittelbarer Umgebung führt und das mit modernen Herstellungsverfahren einfach zu fertigen ist.

Erfindungsgemäß wird die Aufgabe durch eine neuartige Ausbildung eines metallischen Leichtbau-Strukturbauteiles wie in Anspruch 1 ausgeführt sowie ein Verfahren zu seiner Herstellung wie in dem Anspruch 39 angegeben gelöst. Weiterbildungen der erfindungsgemäßen Lösungen für das Leichtbau-Strukturbauteil sind in den Unteransprüchen 2 bis 38 angegeben.

Verfahrenstechnische Weiterbildungen sind in den Unteransprüchen 40 bis 52 niedergelegt.

Dazu wird erfindungsgemäß im wesentlichen von den drei neuen Erkenntnissen Gebrauch gemacht, dass

- die nach dem Stand der Technik bekannten Ausführungsformen integraler Leichtbaustrukturen und hier insbesondere Flugzeug-Rumpfstrukturen infolge einer nicht schweißgerechten konstruktiven Auslegung die Möglichkeiten der Fügetechnik nicht ausreichend nutzen,

- es auch möglich ist, integrale Strukturen mit lokal wirksamen Elementen auszuführen, die die Schwachstelle Schweißnaht vermeiden und ein differenzielles Versagensbild erzeugen

- und dass ein ausreichend fehlerfreies Schweißen auch ohne ein beidseitiges gleichzeitiges Laserstrahlschweißen mit einem gemeinsamen Schmelzbad möglich ist, wenn neue Laserstrahlquellen mit höchster Strahlqualität und geeigneter, prozessangepasster Strahlformung (Twin-Spot oder elliptischer Strahl) sowie geeignete Schweißzusatzwerkstoffe verwendet werden.

Entsprechend dem Anspruch 1 besteht die erfindungsgemäße Lösung darin, dass der Steg des Versteifungselementes auf seiner dem Hautblech zugewandten Seite im Gegensatz zu allen bisherigen nach dem Stand der Technik bekannten Lösungen nicht aus einem Fuß, sondern aus zwei räumlich getrennten Schenkeln besteht, die beide an den Fußflächen der Schenkel mittels zweier getrennter Fügezonen stoffschlüssig mit dem Hautfeld verbunden sind. Diese Anordnung hat die Vorteile, dass bei gleichem Gewicht eine deutlich steifere Anordnung realisiert ist, die - verglichen mit der bisherigen Lösung - die mechanische Beanspruchung infolge Kopfzug und Biegung in den Schweißnähten reduziert, weniger empfindlich auf Schweißfehler reagiert und hinsichtlich der Anforderungen an die Führungsgenauigkeit der beiden Laserstrahlen zueinander weit weniger anspruchsvoll ist.

Für höhere Belastungen, so wie sie z. B. im Flugzeugbau normalerweise vorherrschen, wird, wie in Anspruch 2 beschrieben, das Hautfeld so ausgebildet, dass es im Bereich der Anschlussstellen der Fügezonen eine Aufdickung in Form eines Hautfeldsockels aufweist.

In den Ansprüchen 3 und 4 wird ausgeführt, dass die Versteifungselemente in der erfindungsgemäßen Ausbildung des Strukturbauteiles sowohl als Stringer oder auch als Spant ausgeführt werden können.

Der Erfindungsgedanke ist nicht darauf beschränkt, dass, so wie in Anspruch 5 ausgeführt, die Fügezone eine Laserschweißnaht sein muss. Genauso gut können, wie in den Ansprüchen 6 und 7 dargelegt, die Fügezonen auch aus Rührreibschweißzonen oder Klebezonen bestehen.

Anspruch 8 nutzt in vorteilhafter Weise die Erkenntnis aus, dass sich durch eine lokale Verdickung des Hautbleches - hier als Hautfeldversteifungssockel ausgeführt - die Rissfortschrittsgeschwindigkeit im Belastungsfall "Umfangsriss unter gebrochenem Stringer" während Durchschreiten des Stringers deutlich reduzieren lässt. Insbesondere wird durch die Stützwirkung des lokal verdickten Hautbleches die Belastung der Schweißnaht reduziert und die Rissfortschrittsgeschwindigkeit im ersten Schenkel verringert. Darüber hinaus muss die nun geteilte Rissspitze auf mehreren Pfaden größere Wege zurücklegen, bis der zweite Stringerschenkel und der gesamte Stringersteg und -kopf durchtrennt sind.

Die Ansprüche 9 und 10 geben eine Lehre für eine vorteilhafte Auslegung der geometrischen Abmaße der Versteifungselement-Hautblech-Anordnung an.

Der Erfindungsgedanke ist nicht allein darauf bezogen, dass die Köpfe der Versteifungselemente in klassischer L-Form ausgebildet werden. Ohne Verletzung des Erfindungsgedankens kann, wie in Anspruch 11 vermerkt, das Versteifungsprofil z. B auch als U-Profil oder als ein einem U-Profil ähnliches Profil ausgebildet werden. In dieser Form lässt sich die Kopfseite des U-Profils besonders gut mit eventuell nötigen Anbauteilen verbinden. Die folgenden Ansprüche 12 bis 15 bilden die geometrische Form des Versteifungselementes für diesen Fall weiter aus.

Die Ansprüche 16 bis 20 führen eine neue zusätzliche Variante zur Verbesserung der Schadenstoleranz ein. Sie sehen die Anordnung von Durchbrüchen innerhalb der Schenkel des Versteifungselementes vor. Wenn ein laufender Riss in einen dieser Durchbrüche hineinläuft, kann er gestoppt werden. Die Ursache dafür besteht darin, dass der sehr hohe Spannungsintensitätsfaktor an der Rissspitze nach Einmünden des Risses in den Durchbruch durch die niedrigere Kerbformzahl des Durchbruches ersetzt wird. Faktisch kommt das der Notwendigkeit eines Neustartes des Risses in einem Spannungsfeld mit einer geringeren Spannungsüberhöhung gleich.

Aus Experimenten ist bekannt, dass sich ein einmal gebildeter Primärriss unter den Belastungsbedingungen des Two-Bay-Crack-Kriteriums nur schwer aus seiner generellen Rissfortschrittsrichtung ablenken lässt. Dadurch kann es passieren, dass der Riss bei einer konventionellen Ausbildung des Stringers zwischen den beiden Durchbrüchen hindurch läuft und durch die lokal geringere Stützwirkung kurzfristig sogar beschleunigt wird. Dem trägt die versetzte Anordnung der Durchbrüche in den beiden Schenkeln, so wie in Anspruch 18 ausgeführt, Rechnung. Für den Unterrumpfbereich können diese Durchbrüche gleichzeitig vorteilhaft als Entwässerungsbohrungen genutzt werden.

Anspruch 21 trägt der Tatsache vorteilhaft Rechnung, dass in einem Flugzeugrumpf die Belastungsspannungen nicht homogen verteilt sind. So kann in besonders hoch belasteten Bereichen, durch das lokale Applizieren eines Dopplers, aus einem schadenstoleranten faserverstärkten Laminat, die Rissfortschrittsgeschwindigkeit im Stringerfuß weiter verringert werden. Insbesondere für den Fall, dass das Versteifungselement ein Spant ist, kann auch die Abminderung der strukturellen statischen Belastbarkeit durch die Durchbrüche bei einer Zugbelastung auf den Spantsteg kompensiert werden.

Die Ansprüche 22 bis 25 erlauben einen neuen Ansatz zur Absenkung der Belastungsspannung in den Fügezonen. Im Bereich der Rumpfoberschalen unterliegen die Fügezonen einer hohen Zugspannung, die durch direkt in ihrer Nähe angeordnete Zugentlastungselemente deutlich reduziert werden kann.

Im Anspruch 26 wird eine alternative Ausbildung für ein metallisches Leichtbau-Strukturbauteil angegeben, bei der sich im Hohlraum, der durch die beiden Schenkel des Versteifungselementes und dem Hautblech gebildet wird, ein Verstärkungselement befindet, das aus einem Werkstoff mit einem deutlich höheren E-Modul als das Hautblech und die Versteifungselemente besteht und das mit mindestens einem der Partner Versteifungselement bzw. Hautblech form- und / oder kraftschlüssig verbunden ist. Bei einer Dehnung des Hautfeldes in Richtung der Längsachse der Versteifungselemente reduziert die kraft- und / oder formschlüssige Verbindung zwischen Verstärkungselement und Versteifungselement bzw. Hautblech die Dehnung im Fußbereich des Versteifungselementes und damit in den Fügezonen. Dadurch werden die beiden Schweißnähte soweit entlastet, dass sich, trotz einer den Rissfortschritt begünstigenden Mikrostruktur in der Schweißzone, eine lokal verringerte Rissfortschrittsgeschwindigkeit ergibt. Da die Dauerfestigkeit der nicht angerissenen Verstärkungselemente sehr viel größer ist als die Spannung für Rissausbreitung im Hautblech und Versteifungselement, bleibt das Verstärkungselement auch noch intakt, wenn der Riss die beiden Schenkel der Versteifungselemente und den Hautfeldversteifungssockel durchschritten hat. Neben der verringerten Rissfortschrittsgeschwindigkeit wird auch die Restfestigkeit erhöht. Im Vergleich zum Stand der Technik wirkt sich positiv aus, dass das Verstärkungselement sich in unmittelbarer Nähe der Schweißnaht befindet und damit die Spannungsintensität bei Annäherung des Risses an die Fügestelle zwischen Hautfeld und Versteifungselement effektiv reduzieren kann. Damit ist die erfindungsgemäße Anordnung der Verstärkungselemente geeignet, Nachteile einer integralen Struktur hinsichtlich Schadenstoleranz zu vermeiden bzw. zu verringern.

Die Ansprüche 27 bis 35 geben vorteilhafte Ausgestaltungen des Anspruches 26 an.

Die Ansprüche 36 und 37 nutzen in vorteilhafter Weise die Erkenntnis, dass Werkstoffanhäufungen besonders effektiv den Rissfortschritt im Hautfeld verringern können, wenn sie sich in unmittelbarer Nähe des Hautfeldes befinden. Zur Vermeidung der Ausknickung tragen sie wegen ihres geringeren Widerstandsmomentes weniger bei, reichen aber aus, um den Abstand der Versteifungselemente etwas vergrößern zu können und damit summarisch Gewicht einzusparen. Darüber hinaus sind sie im Stande, das akustische Verhalten des Rumpfes zu verbessern.

Anspruch 38 setzt die Erkenntnis um, dass bei asymmetrisch zur Längsachse der Versteifungselemente angeordneten Köpfen die Versteifungselemente sowohl bei Zug- als auch bei Druck- oder Schub-Druck-Belastung sich quer zu ihrer Längsrichtung verbiegen und damit hohe Biegespannungen in der Schweißnaht erzeugen.

Anspruch 39 beschreibt die wesentlichsten Verfahrensschritte zur Herstellung des erfindungsgemäßen metallischen Leichtbau-Strukturbauteiles, sowie es in den Ansprüchen 1 bis 38 beschrieben ist. Die Ansprüche 40 und 41 beziehen sich auf die Nutzung des Laserstrahlschweißens als die günstigste Verfahrensvariante. Im Anspruch 40 wird von der Erfahrung Gebrauch gemacht, dass sich die Entstehung von Schweißfehlern (Poren, Auswürfe) beim Laserstrahlschweißen von Aluminium durch eine geeignete Strahlformung reduzieren lässt.

Die Ansprüche 46 bis 48 geben Verfahren an, mit denen sich die erfindungsgemäßen Versteifungselemente besonders günstig spanlos mechanisch fertigen lassen. In Anspruch 46 wird das Strangpressen als ein sehr preiswertes Verfahren benutzt, um die Versteifungselemente einschließlich ihrer Schenkel herzustellen. Wird das Versteifungselement als Spant ausgebildet, ergibt sich die Schwierigkeit, dass er im Fall z. B. eines Flugzeugrumpfes bogenförmig ausgeführt sein muss. Solche bogenförmigen Halbzeuge lassen sich auch sehr günstig - so wie in Anspruch 47 ausgeführt - herstellen, wenn während des Strangpressens gleich hinter dem Strangpresswerkzeug eine Querkraft auf das Halbzeug ausgeübt wird. Wenn die Höhe des Versteifungselementes im Verhältnis zu seiner Dicke zu groß ist, ist es nach Anspruch 48 günstiger, die beiden Schenkel durch einen Spalten mittels Drückwalzen zu erzeugen.

Der Anspruch 49 beschreibt die wesentlichen Verfahrensschritte zur Herstellung der alternativen Anordnung eines metallischen Leichtbau-Strukturbauteils, wie es in den Ansprüchen 26 bis 33 ausgeführt ist. Besonders günstige verfahrenstechnische Varianten zum Einbringen des Verstärkungselementes werden in den Ansprüchen 50 bis 52 dargelegt.

Die Erfindung wird an den nachfolgenden Ausführungsbeispielen näher erläutert. Sie werden anhand der Fig. 1 bis 11 näher beschrieben. In den Figuren sind gleiche Merkmale mit gleichen Bezugszeichen versehen.

Es zeigt:

**Fig. 1** einen Querschnitt eines metallischen Leichtbau-Strukturbauteiles in einer ersten, besonders einfach zu fertigenden Ausführungsform,

**Fig. 2** einen Querschnitt eines erfindungsgemäßen Strukturbauteiles für erhöhte Anforderungen hinsichtlich Schadenstoleranz,

**Fig. 3** einen Vergleich der Biegebelastungen in einer laserstrahlgeschweißten Stringer-Haut-Verbindung nach dem Stand der Technik mit der erfindungsgemäßen Stringer-Haut-Verbindung,

**Fig. 4** eine alternative Ausführungsform für die Gestaltung von Stringern oder Spanten mit integrierten Rissstoppern,

**Fig. 5** einen Querschnitt durch eine Stringer-Haut-Verbindung, die durch ein eingelegtes Verstärkungselement für höchste Anforderungen hinsichtlich Schub-Druck-Belastbarkeit, Schadenstoleranz und Restfestigkeit ausgebildet ist,

**Fig. 6** einen Querschnitt der höchstbelastbaren Stringer-Haut-Verbindung in einer zweiten Ausführungsform,

**Fig. 7** einen Querschnitt einer höchstbelastbaren Stringer-Haut-Verbindung in einer dritten Ausführungsform,

**Fig. 8** einen Querschnitt durch eine Ausführungsform mit zusätzlichen Elementen zur Versteifung des Hautfeldes,

**Fig. 9** den Querschnitt einer Ausführungsform, bei dem das Versteifungselement als U-Profil ausgeführt ist,

**Fig. 10** den Querschnitt einer Ausführungsform, bei der sich in unmittelbarer Nähe der beiden Schweißzonen innerhalb des Hautbleches drahtförmige Zugentlastungselemente befinden,

**Fig. 11** den Querschnitt mit einem drahtseilförmigen Zugentlastungselement direkt unterhalb des Hautfeldversteifungssockels.

**Ausführungsbeispiele**

**Beispiel 1:**

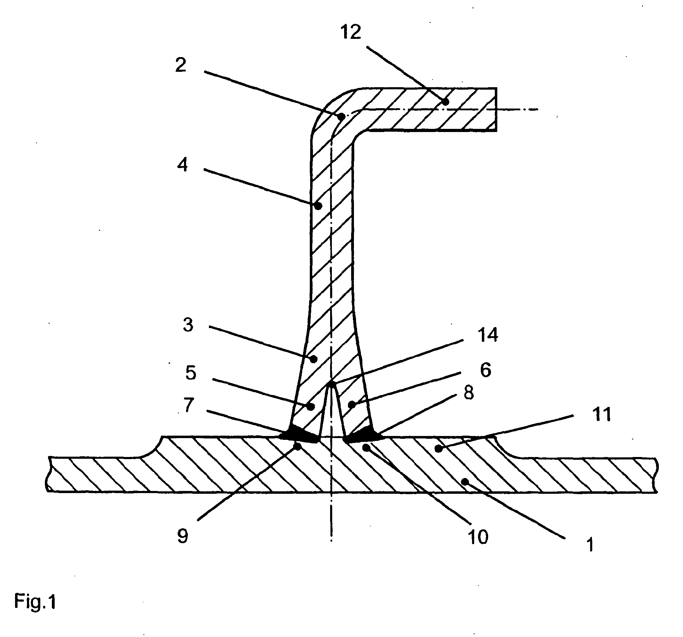

Der metallische Unterrumpf eines Flugzeuges soll mit einer höheren Beulstabilität und einer verbesserten Steifigkeit ausgeführt werden. Gleichzeitig sollen die Herstellungskosten und das Gewicht reduziert werden. Dazu wird von einer genieteten auf eine laserstrahlgeschweißte Konstruktion in einer erfindungsgemäßen Konfiguration übergegangen, wie sie in Fig. 1 für die Variante Stringer-Hautfeld dargestellt ist. Das Beispiel bezieht sich vorrangig auf die Ansprüche 1 bis 5, 39 bis 41 sowie 46 bis 48.

Das Hautblech (1) weist einen Hautfeldsockel (11) auf. Ein im Stringerkopf (12) normal ausgeführter Stringer (2) weist auf seiner dem Hautblech zugewandten Seite zwei Schenkel (5, 6) auf. Die Unterseiten der beiden Schenkel (5, 6) bilden die Fußflächen (7, 8). Sie verlaufen waagerecht und liegen somit eben auf dem gleichfalls ebenen Hautfeldsockel (11) auf. Beide Schenkel (5, 6) sind mit zwei getrennten Fügezonen (7, 8), deren Mittellinien einen Winkel von jeweils $\gamma = 20°$ zur Oberfläche des Hautfeldsockels (11) bilden, stoffschlüssig mit dem Hautfeldsockel verbunden. Die Fügezonen (7, 8) werden durch Laserstrahlschweißen erzeugt. Die Summe der Tiefe der beiden Fügezonen entspricht der Stringerdicke $d_S$.

Für die Ausführung des Leichtbauelementes werden folgende Abmaße gewählt:

Hautfelddicke: $d_H = 1,6$ mm, Stringerhöhe: $h_S = 31,5$ mm, Dicke des Hautfeldsockels: $d_{Hs} = 2,4$ mm, Breite des Hautfeldsockels: $b_{HA} = 23$ mm, Schenkelhöhe $s_S = 8,5$ mm, Stringerdicke $d_S = 3,3$ mm, Stringerkopfbreite: $b_S = 17,5$ mm, Schenkeldicke in der Ebene der Fügezone und Anbindungstiefe der Schweißnähte $t_S = 1,65$ mm, Winkel zwischen den beiden Schenkeln (5, 6) $\alpha = 40°$, Abstand der Innenkanten der beiden Schenkel auf dem Hautfeldsockel $b_{rs} = 3,0$ mm. Sowohl Stringer als auch Hautfeld werden aus einem schweißbaren Al-Werkstoff, in diesem Fall aus der Legierung 6013 T4, gefertigt. Die Aufdickung (11) des Hautbleches (1) wird durch chemisches Fräsen aus dem Hautblech herausgearbeitet. Die Stringer (2) werden einschließlich der Schenkel (5, 6) stranggepresst. Anschließend wird das Hautfeld (1) mittels einer Vakuumspannvorrichtung gespannt. Mittels einer in den Schweißkopf integrierten mitlaufenden Spanneinheit wird der Stringer (2) symmetrisch auf dem Hautfeldsockel (11) positioniert und durch Anlegen einer Kraft von etwa 20 kp auf das Hautfeld (1) gepresst. Durch seitliche Rollen wird verhindert, dass sich die Position der beiden Schenkel zueinander infolge der Druckkraft oder infolge seitlicher Kräfte, hervorgerufen durch das Ausrichten des Stringers auf dem Hautfeld, ändert.

Das Fügen erfolgt mit zwei $CO_2$-Lasern mit einer Leistung von jeweils 2 800 W. Zur Vermeidung von Heißrissen wird mit drahtförmigem Schweißzusatzwerkstoff der Legierung AlSi12 gearbeitet. Der Schweißdraht hat einen Durchmesser von 0,8 mm und wird mit einer Drahtvorschubgeschwindigkeit von 4 500 mm / min zugeführt. Die Schweißgeschwindigkeit beträgt 4 400 mm / min. Zur Minimierung des Verzuges wird beidseitig gleichzeitig geschweißt. Als Winkel γ zwischen Laserstrahlachse und Oberfläche des Hautfeldes (1) wird γ = 20° eingestellt.

Nach Meinung der Fachwelt [vgl. z. B. Heider "Lasergerechte Konstruktion und lasergerechte Fertigungsmittel zum Schweißen großformatiger Aluminium-Strukturbauteile", in: VDI - Fortschrittsberichte, Reihe 2: Fertigungstechnik, Nr. 326, VDI-Verlag Düsseldorf (1994)] kann eine schweißfehlerarme (Heißrissigkeit, Porigkeit, Auswürfe) Stringer-Haut-Verbindung nur durch beidseitig-gleichzeitiges Schweißen bei Gewährleistung eines gemeinsamen Schmelzbades der beiden Laserstrahlen erzielt werden.

Neuere Untersuchungen haben jedoch gezeigt, dass sich rissfreie, porenarme und auswurffreie Schweißnähte auch mittels einer geeigneten Strahlformung des normalerweise kreisrunden Laserstrahlfokus erzielen lassen. Als besonders günstig hat sich die Teilung des Laserstrahles in zwei in Vorschubrichtung hintereinander liegende Strahlen herausgestellt. Zur Vermeidung von Auswürfen und der Verringerung der Porigkeit wird deshalb ein Twin-Spot-Spiegel angewandt. Als Abstand der Foki wird 0,3 mm bei einer Aufteilung der beiden Leistungsanteile im Verhältnis 60 : 40 bei einer Laserleistung von 3 500 W gewählt.

Nach Einstellen aller Parameter wird der Schweißprozess gestartet und die vorgesehene Fügelinie CNC-gesteuert unter Mitlaufen der Stringerspanneinheit abgefahren. Nach dem Schweißen wird das Panel auf den Zustand T6 warmausgelagert.

Mit bis auf Höhe und Kopf des Versteifungselementes (2) gleichen geometrischen Abmaßen können auch die Spanten ausgeführt werden. Hierbei ist zusätzlich zu beachten, dass das Hautfeld mit einem Radius R = 2 820 mm gekrümmt ist. Das heißt, dass die Spanten so gekrümmt ausgeführt werden müssen, dass die Unterseite der beiden Schenkel (5, 6) eine Zylinderschale mit dem gleichen Radius beschreibt. Das wird realisiert, indem beim Strangpressen hinter dem Strangpresswerkzeug eine Querkraft in Richtung Spantkopf ausgeübt wird. Verfahrensmäßig läuft das Fügen der Spanten analog dem der Stringer ab.

Im Ergebnis dessen entsteht vorteilhaft und im Vergleich zum Nieten preisgünstiger, schneller und ohne Gewichtszuwachs, eine steifere und gegen Ausknickung sowie zyklische Druckbelastung resistentere Flugzeugrumpf-Unterschale.

In dieser einfachsten Ausführungsform ist das erfindungsgemäße Leichtbauelement auch gut für die Herstellung von steifen Aluminium-Rümpfen von Wasserfahrzeugen, insbesondere von Sport- und Rennbooten geeignet. Weitere sehr vorteilhafte Anwendungen sind Druck- und Vakuumbehälter.

**Beispiel 2:**

Weitere erfindungsgemäße Vorteile sollen an Hand einer weitergebildeten Ausführungsform erläutert werden, die zu deutlich besserem Schadenstoleranzverhalten führt. Sie ist besonders für den Seiten- aber auch Oberrumpfbereich, d. h. für Schub-Druck- und / oder Zugbelastung geeignet.

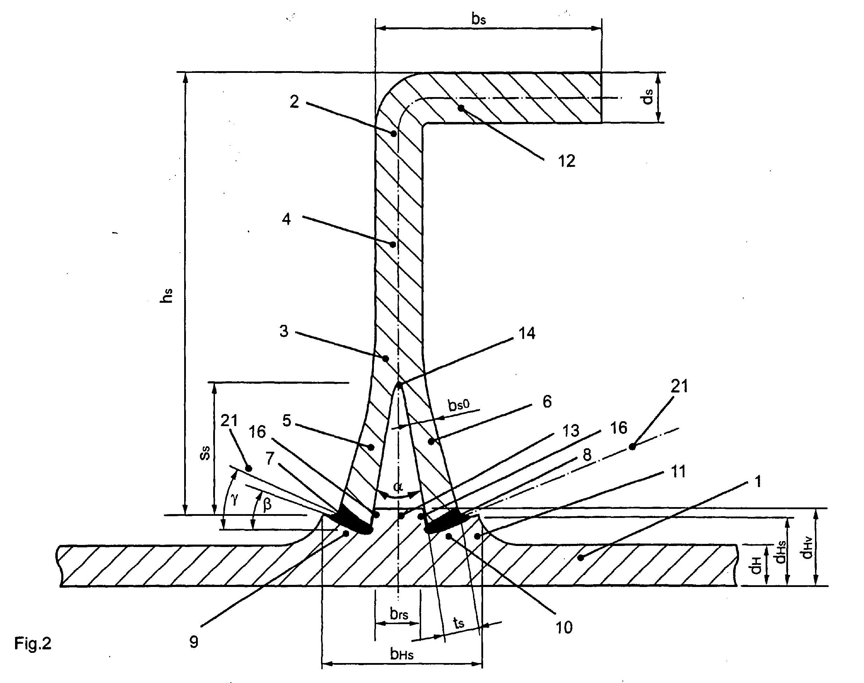

Eine bevorzugte geometrische Ausführungsform ist in Fig. 2 dargestellt. Zusätzlich zu den im Ausführungsbeispiel 1 genannten Merkmalen weist das Hautblech (1) noch einen Hautfeldversteifungssockel (13) auf. Die beiden Außenseiten (16) des Hautfeldversteifungssockels (13) sind um den Winkel α / 2 geneigt und passen sich damit den Innenseiten der Schenkel (5, 6) an, die auch um den Winkel α / 2 aus der Symmetrielinie hinaus geneigt sind. Die Fußflächen 1 und 2 (7, 8) der beiden Schenkel (5, 6) sind um den Winkel β ≥ α / 2 gegenüber der Oberfläche des Hautfeldes (1) geneigt. Dadurch liegt die Schweißnaht bei einem Schweißnahtwinkel γ ≈ β senkrecht oder nahezu senkrecht zur Außenfläche der Schenkel (5, 6). Im Gegensatz zum Ausführungsbeispiel 1 sind hier die Schenkel zum Schenkelfuß hin verdickt ausgeführt, d. h. die Schenkeldicke in der Ebene der Fügezonen $t_S$ ist größer als die Schenkeldicke $b_{sO}$ in der Nähe des Verzweigungspunktes (14) der beiden Schenkel (5, 6).

Diese Stringer-Haut-Anbindung wird mit folgenden Abmaßen ausgelegt: Stringerhöhe $h_S$ = 37 mm, Stringerkopfbreite $b_S$ = 21 mm, Stringerdicke $d_S$ = 4,4 mm, Dicke des Hautbleches $d_H$ = 2,4 mm, Dicke des Hautfeldsockels $d_{Hs}$ = 3,4 mm, Dicke des Hautfeld-Versteifungselementes (13) $d_{Hv}$ = 5,0 mm, Breite des Hautfeldsockels $b_{Hs}$ = 15,2 mm, Breite des Hautfeldversteifungssockels $b_{rs}$ = 9,2 mm, Schenkeldicke in der Nähe des Verzweigungspunktes der beiden Schenkel $b_{sO}$ = 2,2 mm, Schenkelhöhe $s_S$ = 11,0 mm, Schenkeldicke in der Ebene der Fügezone und gleichzeitig Anbindungstiefe der Schweißnaht $t_S$ = 2,7 mm, Winkel zwischen den beiden Schenkeln α = 40°, Winkel zwischen der Fügefläche (7, 8) und dem Hautfeld β = 22,0°, Radius im Verzweigungspunkt (14) 0,6 mm.

Die Fertigungsschritte verlaufen bis auf die Herstellung des Hautfeldversteifungssockels (13) analog denen im Beispiel 1. Zur Gewährleistung einer passfähigen Anlage zwischen den Innenseiten der beiden Schenkel (5, 6) und den Seitenflächen des Hautfeldversteifungssockels (16) und den Fügeflächen (9, 10) wird diese Partie durch HSC-Fräsen an dem vorher durch chemisches Abtragen erzeugten Hautfeld (1) herausgearbeitet. Es ist aber auch möglich, auf das chemische Abtragen ganz zu verzichten und das gesamte Dickenprofil des Hautbleches (1) durch HSC-Fräsen herzustellen.

Als Schweißparameter werden folgende Werte gewählt: Laserleistung 2 800 W, Schweißgeschwindigkeit 4 000 mm / min, Drahtvorschubgeschwindigkeit 4 000 mm / min. Die Neigung der Laserstrahlachse zur Oberfläche des Hautfeldes wird entsprechend der Neigung der Fügeflächen auf $\gamma = 22{,}2°$ eingestellt. Alle anderen Schweißparameter werden analog zu denen im Beispiel 1 gewählt.

Die so erzeugte Leichtbau-Rumpfschale weist besonders hohe Werte hinsichtlich Kopfzugfestigkeit, Beul- und Knickstabilität sowie Schadenstoleranz auf.

Gegenüber der normalen beidseitig gleichzeitig laserstrahlgeschweißten Variante mit der gleichen Stringerdicke $d_S = 4{,}4$ mm steigt die Kopfzugfestigkeit von etwa 230 MPa auf etwa 325 MPa. Darüber hinaus nimmt die Streubreite der ermittelten Kopfzugwerte signifikant ab. Ungeachtet der höheren Kopfzugwerte ist bei vergleichbaren Lasten die Werkstoffanstrengung in der erfindungsgemäßen Variante in der Schweißnahtebene wegen der von 4,4 mm auf 2 x 2,7 mm = 5,4 mm vergrößerte Anbindungsbreite geringer.

In diesem Fall sind folgende Verhältnisse nach Anspruch 10 realisiert: $t_s/d_s = 0{,}61$; $b_{s0}/t_s = 0{,}81$; $s_s/h_s = 0{,}30$; $\beta = 22°$. Für den Fall, dass auf eine nachfolgende Warmauslagerung verzichtet werden soll, kann auch die Schenkeldicke in der Ebene der Fügezone und Anbindungstiefe der Schweißnaht $t_s$ auf $t_s = 4{,}9$ mm erhöht werden. Damit würde bei konstant gehaltenen übrigen geometrischen Parametern gelten: $t_s/d_s = 1{,}11$; $b_{s0}/t_s = 0{,}45$.

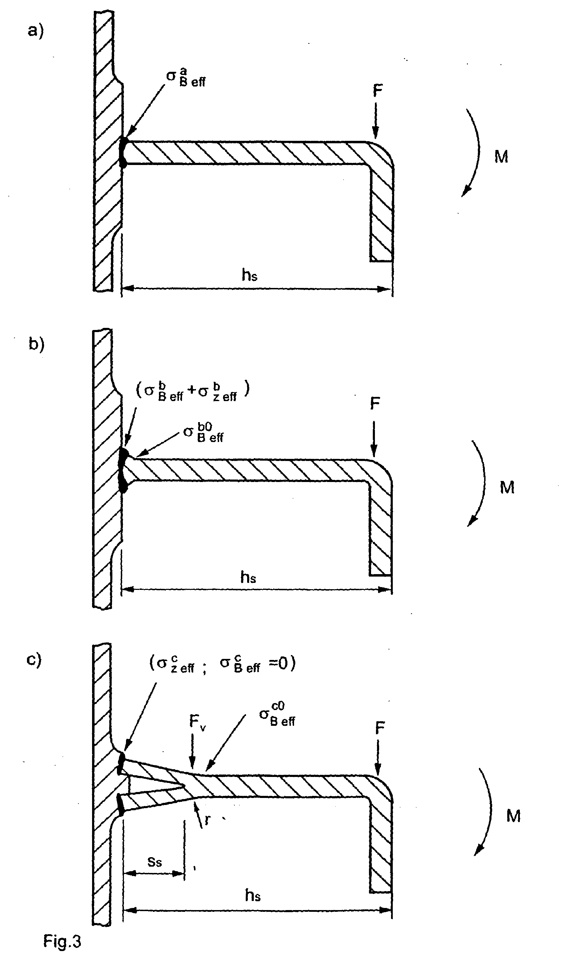

Die Verbesserung hinsichtlich des Einsatzes in Schub-Druck belasteten Rumpfschalen wird in Fig. 3 erläutert. Durch die asymmetrische Ausführung der Stringer wirkt sowohl bei einer Zug-, als auch bei einer Druck- und besonders ausgeprägt bei einer Schub-Druck-Belastung ein Biegemoment M in Richtung des abgewinkelten Endes des Stringerkopfes (12) auf den Stringer ein (siehe Fig. 3 a). Der am höchsten beanspruchte Querschnitt liegt dabei in der Schweißnaht. Die mit dem Biegemoment verbundene Kraft F führt an der Schweißnahtoberfläche zu einer effektiven Biegespannung in Höhe von

$$\sigma^a{}_{Beff} = \frac{6 * \alpha_{KB} * F * h_s}{L * d_s{}^2}$$

mit $\alpha_{KB}$ als Kerbformzahl für Biegung in der Position der Schweißnaht und L als Hautfeld- bzw. Stringerlänge.

In der erfindungsgemäßen Lösung dagegen liegt der am stärksten auf Biegung beanspruchte Querschnitt nicht mehr in der Schweißnaht selbst, sondern in der Ebene der Schenkelverzweigung (siehe Fig. 3 c). Wegen der veränderten Hebelverhältnisse und des im Vergleich zur Schweißnaht viel größeren Kerbradius sinkt die effektive Biegespannung im höchstbeanspruchten Bereich auf

$$\sigma^{c0}{}_{Beff} \approx \frac{6 * \alpha^r{}_{KB} * F * (h_s - s_s)}{L * d_s{}^2}$$

(II)

mit $\alpha^r{}_{KB}$ als Kerbformzahl für Biegung am Ort der Schenkelverzweigung mit dem Radius r. Vergleicht man die Spannungen in den jeweils am höchsten auf Biegung belasteten Querschnitten, so ergibt folgender Abminderungsfaktor $R_1$:

$$R_1 = \frac{\sigma^{c0}{}_{Beff}}{\sigma^a{}_{Beff}} = \frac{\alpha^r{}_{KB} * (h_s - s_s)}{\alpha_{KB} * h_s} .$$

(III)

Mit den oben angeführten Werten der geometrischen Abmessungen und $\alpha_{KB} \leq 3$, $\alpha^r{}_{KB} \approx 1{,}1$ resultiert ein Spannungsabminderungsfaktor $R_1 \cong 0{,}26$. D. h., dass die höchste effektive Biegespannung durch die erfindungsgemäße Ausführung auf 26 % sinkt und sich zudem von der Schweißnaht in ein nicht mikrostrukturell geschädigtes Gebiet verlagert.

Die Biegebeanspruchung in der Schweißnaht wird infolge der Stützwirkung des unteren Schenkels in Fig. 3 c annähernd durch eine Zugbeanspruchung $\sigma^c{}_{Zeff}$ in der Höhe von

$$\sigma^c{}_{Zeff} = \frac{\alpha_{KZ}*h_s*F}{s_s*t_s*L*\sin[2*\arctan(b_{rs}/2*s_s)]}$$

(IV)

ersetzt (mit $\alpha_{KZ}$ als Kerbformzahl für Zugbelastung am Ort der Schweißnaht).

Analog dem Abminderungsfaktor $R_1$ kann auch ein Abminderungsfaktor für die Spannung in der Schweißnaht $R_2$ infolge des Wirkens des Biegemoments M definiert werden:

$$R_2 = \frac{\sigma^c{}_{Zeff}}{\sigma^a{}_{Beff}}$$

(V)

$$R_2 = \frac{\alpha_{KZ}*d_s^2}{6*\alpha_{KB}*s_s*t_s*\sin[2*\arctan(b_{rs}/2*s_s)]}$$

.

(VI)

Mit den im Beispiel 2 ausgeführten Werten und $\alpha_{KZ} \approx \alpha_{KB}$ ergibt sich überschlagsmäßig $R_2$ = 0,15. Das heißt, dass mit der erfindungsgemäßen Lösung die aus der unsymmetrischen Gestaltung der Stringer herrührenden Biegemomente auf die Schweißnaht sehr gering sind und im Gegensatz zu der bisherigen Lösung eine Verschlechterung der Eigenschaften ausgeschlossen werden kann.

Zusammenfassend bedeutet das, dass die Werkstoffanstrengung infolge Druck-, Schub-Druck- oder Zugbelastung im kritischen Schweißnahtbereich abnimmt und dass damit laserstrahlgeschweißte Integralstrukturen auch für Seiten- und Oberschalen anwendbar sind.

Verglichen mit der erfindungsgemäßen Lösung sind andere Lösungen zur Absenkung der durch Biegung hervorgerufenen Werkstoffanstrengung, wie z. B. eine Aufdickung im Stringersteg oder die Verdickung des Stringerfußes entsprechend Fig. 3 b weit weniger effektiv. Wird z. B. nur der Stringerfuß verdickt, nimmt die Kopfzugfestigkeit ab und die zwar reduzierte aber noch vorhandene Biegebelastung in der Schweißnaht reduziert die Belastbarkeit insbesondere bei Schub-Druck- oder Zugbelastung. Darüber hinaus wirkt sich nachteilig aus, dass zur Kompensation der Abminderung der Kopfzugfestigkeiten deutlich größere Schweißnahttiefen benötigt werden, die zu einer Vergrößerung des Verzuges führen.

Im Belastungsfall "Rissfortschritt unter gebrochenem Stringer" wirkt sich positiv aus, dass der Hautfeldversteifungssockel (13) in unmittelbarer Nähe der Schweißnaht die Spannungsüberhöhung in der Rissspitzennähe reduziert. Damit unterliegt die Schweißnaht einer reduzierten Dehnungsamplitude, die zu einer lokal geringeren Rissfortschrittsgeschwindigkeit führt. Selbst nach dem Versagen der Schweißnaht im ersten Schenkel wird die Rissfortgeschwindigkeit durch die Rissverzweigung und die Werkstoffaufdickung im Hautblech reduziert. Wichtig ist darüber hinaus, dass der Stringer selbst nach Versagen der ersten Schweißnaht und des ersten Stringerschenkels seine stabilisierende Wirkung noch nicht verliert. Dadurch wird insgesamt eine verbesserte Schadenstoleranz und Restfestigkeit erreicht.

Weitere Vorteile bestehen hinsichtlich der Vermeidung von unbeabsichtigten Beschädigungen der Schweißnaht während der Montage der Rumpfpanels, beim Rumpfinnenausbau oder im Reparaturfall. Während z. B. bei einer nach dem Stand der Technik ausgeführten Versteifungselement-Haut-Anbindung eine unbeabsichtigte mechanische Belastung (z. B. durch Anstoßen während Montage) quer zum Versteifungselement (Spant oder Stringer) frühzeitig noch vor der Ausbildung irgendwelcher Hinweise am Versteifungselement (z. B. sichtbar bleibende Deformation) Risse in der Schweißnaht entstehen können, kann bei geeigneten Abmessungen des erfindungsgemäßen Versteifungselementes, die Ebene der Schenkelverzweigung als Sollverformungsstelle dienen, die anspricht, bevor in der Schweißnaht schädigende Spannungs- oder Deformationszustände erreicht werden.

Aus Sicht der Qualitätssicherung wirkt sich positiv aus, dass durch die getrennte Lage der Schweißnähte selbst maximale Querschnittsschwächungen, wie sie lokal durch Auswürfe oder sehr lange Schlauchporen zustande kommen können, höchstens 50 % des Gesamtquerschnittes beider Schweißnähte erfassen können. Schweißtechnologisch wirkt sich sehr vorteilhaft aus, dass die Anforderungen zur Gewährleistung hochwertiger fehlerfreier Schweißnähte aus folgenden Gründen merklich reduziert werden:

- Die Foki der beiden Laserstrahlen müssen sich nicht mehr genau treffen. Das reduziert die Anforderungen an die Führungsgenauigkeit der Schweißanlage insbesondere beim Schweißen von nichtebenen Teilen.

- Bindefehler sind einfacher zu vermeiden, weil der Winkel zwischen Laserstrahlachse und der Fügefläche, der derzeit wegen der Abmessungen der Laserstrahlschweißköpfe nicht wesentlich unter 20° gesenkt werden kann, durch die jetzt mögliche Neigung der Fügeflächen auf 0° reduziert werden kann. Damit sinken auch die Anforderungen für die Führungsgenauigkeit des Laserstrahles senkrecht zur Vorschubrichtung und die Gefahr der Bildung von Bindefehlern nimmt ab.

- Durch den Wegfall der bisherigen Forderung nach einem Winkel zwischen Fügefläche und Laserstrahlachse sowie der daraus folgenden vorgegebenen minimalen Schweißnahtbreite kann mit einer geringeren Streckenenergie geschweißt werden, die den Verzug reduziert.

- Aus Sicht der Schweißtechnologie, der Schweißsicherheit und des Verzuges kann auf die Forderung des beidseitig gleichzeitigen Schweißens verzichtet werden.

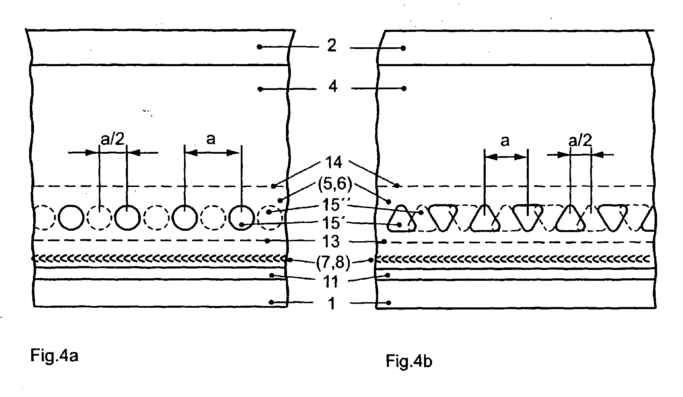

Für noch höhere Anforderungen an die Schadenstoleranz können die beiden Schenkel (5, 6) wie in Fig. 4 a und 4 b in einer Seitenansicht gezeigt, mit Durchbrüchen versehen werden. Diese Durchbrüche wirken als Rissstopper, da ein in sie eindringender Riss zu seiner weiteren Ausbreitung erst einen neuen Riss initiieren muss. Form und Größe der Durchbrüche (15', 15") sind dabei so gewählt, dass sie einen möglichst geringen Steifigkeitsverlust in Längsrichtung des Versteifungselementes nach sich ziehen, andererseits aber als effektiver Rissstopper für einen Riss wirken, der die Schweißnaht durchschritten hat. Die Form der Durchbrüche kann dabei kreisförmig, oval, als Langloch oder als abgerundetes Dreieck gewählt werden. Dabei sind die Durchbrüche (15', 15") der beiden Schenkel (5, 6) jeweils versetzt zueinander angebracht. Dadurch wird schon bei einer geringen Abminderung der Steifigkeit des Versteifungselementes (2) abgesichert, dass der Riss in einem Durchbruch mündet und so die Schadenstoleranz steigt.

**Beispiel 3:**

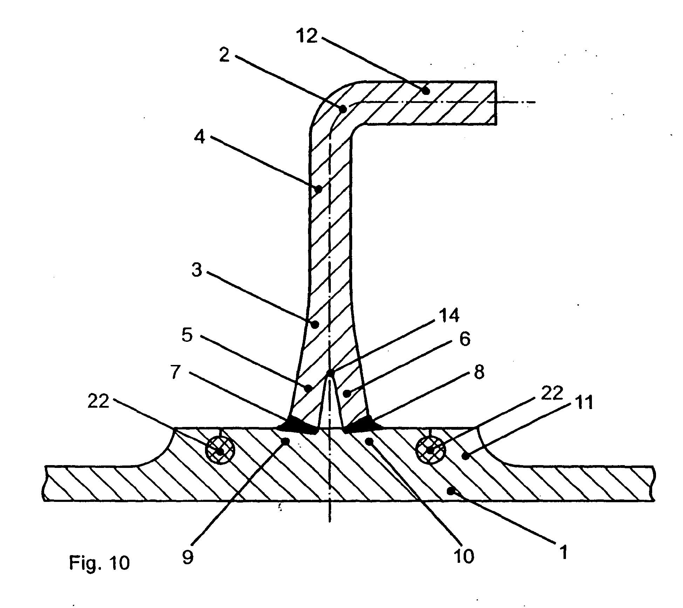

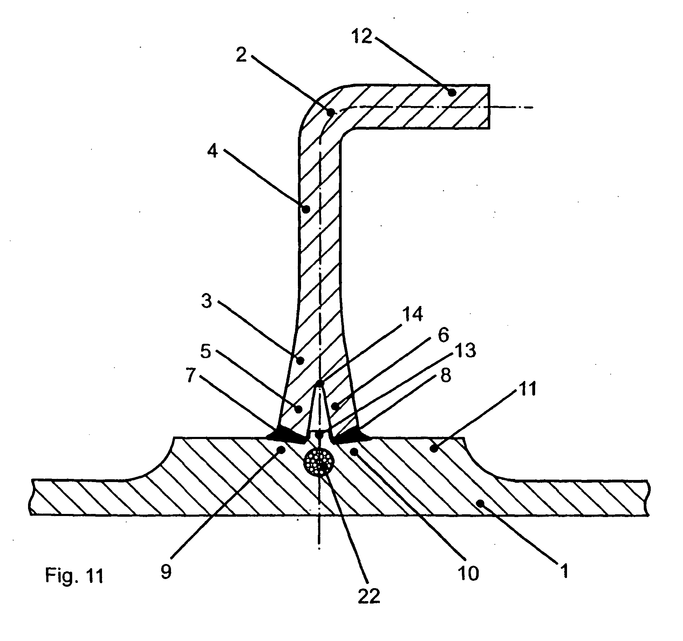

Eine weitere Variante zur Verbesserung der Schadenstoleranz geschweißter Hautfeld-Stringer-Verbindungen wird in den Fig. 10 und 11 erläutert.

Im Oberschalenbereich herrschen längs der Schweißnähte bei einer Stringer-Haut-Anbindung hohe Zugspannungen. Diese können durch parallel zum Stringer in den Hautfeldsockel eingelassene Zugentlastungselemente reduziert werden. In ihrer bevorzugten Ausführungsform bestehen sie aus Drähten aus höchstfesten Stahl-, Titan- oder Ni-Werkstoffen. Ihre positive Wirkung hinsichtlich Schadenstoleranz beruht auf zwei Effekten: Zum ersten setzen sie wegen ihres höheren E-Moduls einer Dehnung längs der Drahtachse einen höheren Widerstand entgegen als der sie umgebende Hautwerkstoff oder die Schweißnaht, weshalb sie ihre Umgebung entlasten. Dadurch sinkt die Rissfortschrittsgeschwindigkeit, wenn sich der Riss dem Zugentlastungselement und damit der Schweißnaht nähert. Zum zweiten wird die Restfestigkeit verbessert, weil das Zugentlastungselement auch noch intakt bleibt, nachdem der Riss die Umgebung des Zugentlastungselementes durchschritten hat.

Erfindungsgemäß sind mehrere Ausführungsformen möglich. Entsprechend Fig. 10 können z. B. in einer bevorzugten Ausführungsvariante zwei vieladrige hochfeste Drähte aus einer Inconel-Legierung unmittelbar rechts und links neben den beiden Schweißnähten in den Hautfeldsockel eingewalzt werden. In dieser Anordnung ist der Effekt der Schweißnahtentlastung besonders ausgeprägt. Durch das Einwalzen und die strukturierte Oberfläche des Drahtseiles kommt eine mechanisch ausreichend stark belastbare Verbindung der Zugentlastungselemente mit dem Hautblech zustande.

In einer weiteren Anordnung (siehe Fig. 11) ist das Zugentlastungselement direkt unter dem Hautfeldversteifungssockel eingewalzt. Bei dieser Ausführungsform lässt sich das Einbringen des Zugentlastungselementes besonders günstig mit der umformtechnischen Erzeugung des Hautfeldversteifungssockels koppeln.

**Beispiel 4:**

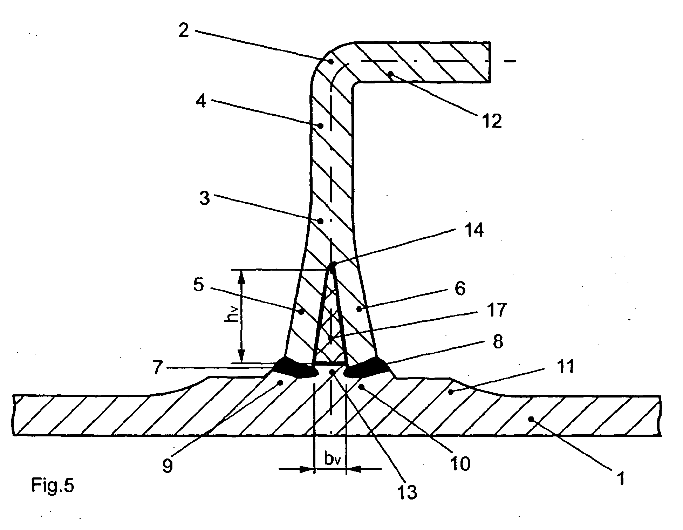

Das in den Fig. 5 bis 7 näher dargestellte Ausführungsbeispiel ist für besonders hohe Anforderungen an die Schadenstoleranz ausgelegt.

Diese Ausführungsform zeichnet sich dadurch aus, dass sich in dem durch die beiden Schenkel (5, 6) und dem Hautfeldversteifungssockel (13) gebildeten Hohlraum ein Verstärkungselement (17) aus einem im Vergleich zum Haut- und Versteifungselementwerkstoff höheren E-Modul befindet. Im Ausführungsbeispiel besteht das Verstärkungselement aus der Titanlegierung Ti6Al4V. Der E-Modul beträgt 110 GPa im Vergleich zur verwendeten Al-Legierung mit 71 GPa. Wie in Fig. 5 angegeben, hat das Verstärkungselement den Querschnitt eines gleichschenkligen Dreiecks mit einer abgerundeten Spitze. In die Oberfläche des Verstärkungselementes (17) ist durch Rollieren eine Anordnung sich kreuzender Rillen eingeprägt.

Zur Realisierung der Anordnung werden die gleichen Abmaße wie im Ausführungsbeispiel 2 gewählt. Die Abmaße des Verstärkungselementes (17) betragen demnach: Sockelbreite: $b_V = 9{,}2$ mm, Höhe: $h_V = 10{,}4$ mm.

Die Verfahrensschritte werden ebenfalls analog dem Ausführungsbeispiel 2 gewählt. Zusätzlich wird nach dem Strangpressen des Stringers (2) das Verstärkungselement (17) eingewalzt.

Der besondere Vorteil dieser Lösungsvariante mit einem Verstärkungselement in unmittelbarer Nähe beider Schweißnähte liegt darin, dass bei einer Belastung des Hautfeldes in Richtung der Stringerlängsachse die Dehnung in unmittelbarer Schweißnahtnähe durch die infolge des größeren E-Moduls geringere Dehnung des Verstärkungselementes und der form- und / oder kraftschlüssigen Verbindung zum Stringer reduziert wird. Das wirkt sich als Verringerung der Längszugspannungen in der Schweißnaht aus. Eine Abschätzung unter den o. a. geometrischen Parametern ergibt etwa eine Spannungsabminderung in Schweißnahtnähe von ca. 6 %. Wegen der starken Abhängigkeit der Rissfortschrittsgeschwindigkeit von der Hautspannung im kritischen Spannungsbereich von 95 MPa resultiert daraus eine deutliche Lebensdauerverlängerung.

Des weiteren wird trotz der Anbringung von Durchbrüchen (15', 15") in den Schenkeln (5, 6) der Stringer (2) die Steifigkeit der Stringer gegenüber dem Stand der Technik nicht reduziert, wodurch die Rissstoppfunktion ohne andere nachteilige Folgen, wie Verringerung der Steifigkeit des Hautfeldes oder geringere Stützfunktion der Stringer, möglich wird.

Infolge seiner höheren Anrissdauerfestigkeit ist das Verstärkungselement (17) auch noch intakt, wenn der Riss beide Schweißnähte durchquert hat. Das reduziert, auch nachdem der Stringer später gerissen ist, temporär die Rissfortschrittsgeschwindigkeit. Mit zunehmendem Risswachstum findet eine Lastumlagerung auf das Verstärkungselement (17) des gerissenen Stringers statt, bis sich schließlich entlang des Stringers fortschreitend, die kraft- und / oder formschlüssige Verbindung zum Stringer löst und das Verstärkungselement unter Energieverbrauch aus dem Hohlraum herausgezogen wird. Durch dieses differenzielle Versagen wird die Restfestigkeit erhöht und die Schadensentwicklung vor dem Bruch weniger katastrophal.

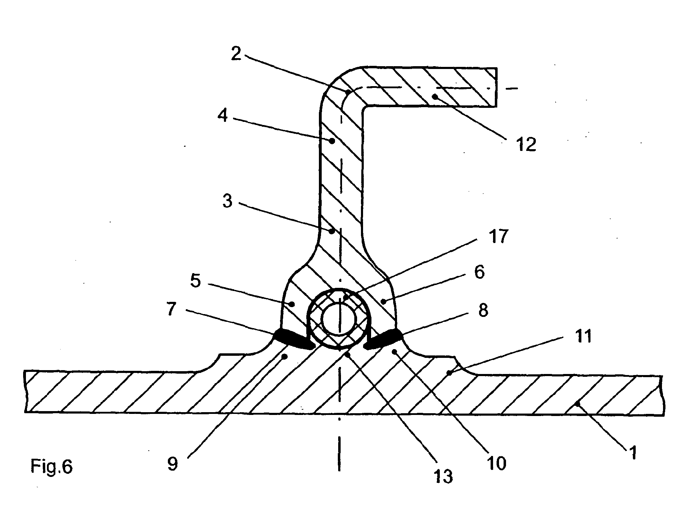

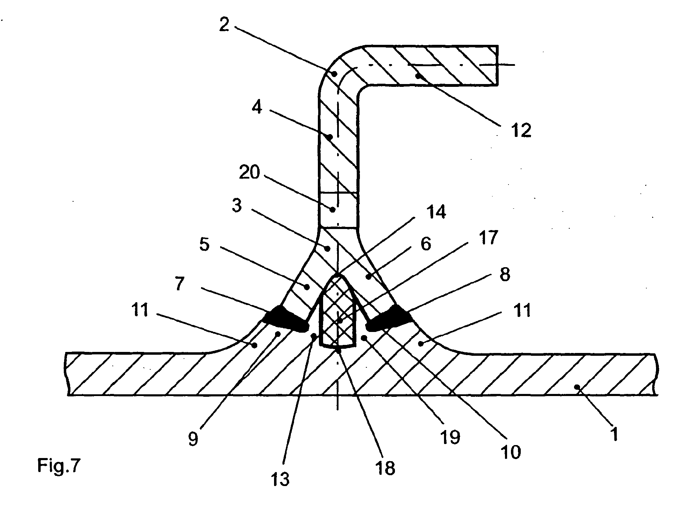

In der in Fig. 6 dargestellten Variante ist das Verstärkungselement (17) als Rohr ausgeführt. Fig. 7 stellt eine Variante vor, bei der das Verstärkungselement (17) vor dem Schweißen in das Hautblech (1) eingewalzt wird. Bei dieser Variante ist die Dehnungsbehinderung der Schweißnaht durch das Verstärkungselement besonders stark ausgeprägt.

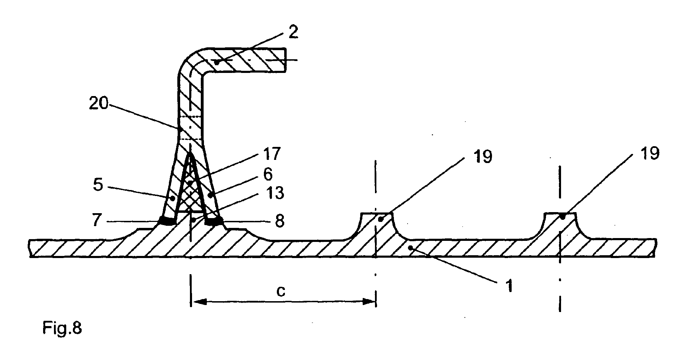

Wegen der Entlastung der Schweißnaht von Biegebeanspruchung durch die zweischenklige Ausführung der Stringer (2) und der zusätzlichen lokal spannungsminderen Wirkung des Verstärkungselementes (17) kann ohne schädliche Auswirkung auch der Stringerkopf (12) in einer größeren Dicke ausgeführt werden (siehe Fig. 8). Das führt zu einer besonders steifen Rumpfschale. Für diesen Fall kann alternativ auch der Abstand der Stringer vergrößert werden. Für das Erreichen größerer Stringerabstände kann es sich als günstig erweisen, in Abständen c vom Stringer (2) oder Spant (2) zusätzliche Hautfeldstege (19) im Hautfeld vorzusehen. Diese lassen sich besonders einfach durch chemisches Fräsen erzeugen.

**Beispiel 5:**

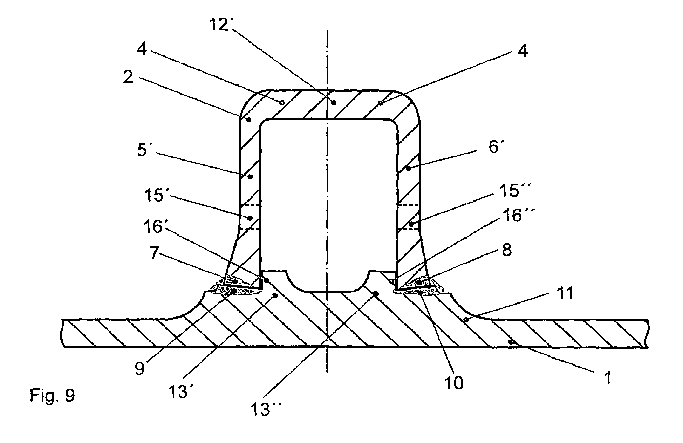

In einigen Anwendungsfällen müssen die Versteifungselemente (2) sowohl in ihrer Ausführungsform als Spante wie auch als Stringer noch zusätzliche Anbauteile, Lastaufnahmeelemente oder eine Innenhaut aufnehmen. Für diese Anwendungen kann es vorteilhaft sein, ohne Verletzung des Erfindungsgedankens, das Versteifungselement als gestürztes U-Profil auszuführen. Fig. 9 zeigt eine geeignete Ausführungsform. Dabei werden die beiden Schenkel (5', 6') bis zum Kopf (12') des Versteifungselementes (2) verlängert, so dass der Kopf (12') und der Steg (4) des Versteifungselementes (2) als eine Einheit ausgeführt sind. Eine weitere Besonderheit besteht darin, dass der Hautfeldversteifungssockel (13', 13") zur weiteren Gewichtseinsparung geteilt ausgeführt werden kann.

**Bezugszeichenliste**

1 -     Hautblech

2 -     Versteifungselemente, Stringer, Spante

3 -     Fuß des Versteifungselementes, Stringerfuß, Spantfuß

4 -     Steg des Versteifungselementes, Stringersteg, Spantsteg

5 -     Schenkel 1

5' -    Schenkel 1, falls Versteifungselement als U-Profil ausgeführt ist

6 -     Schenkel 2

6' -    Schenkel 2, falls Versteifungselement als U-Profil ausgeführt ist

7 -     Fußfläche 1, Fügezone 1

8 -     Fußfläche 2, Fügezone 2

9 -     Anschlussstelle der Fügezone 1, Fügefläche 1

10 -    Anschlussstelle der Fügezone 2, Fügefläche 2

11 -    Hautfeldsockel

12 -    Kopf des Versteifungselementes, Stringerkopf, Spantkopf

12' -   Kopf des Versteifungselementes, falls das Versteifungselement als U-Profil ausgeführt ist

13 -    Hautfeldversteifungssockel

13' -  } Hautfeldversteifungssockel, falls das Versteifungselement
13'' - }  als U-Profil ausgeführt ist

14 -    Verzweigungspunkt der beiden Schenkel 5 und 6

15' -   Durchbrüche im Schenkel 1 des Versteifungselementes

15" -   Durchbrüche im Schenkel 2 des Versteifungselementes

16 -  }
16' - }  Außenseiten der Hautfeldversteifungssockel 13, 13', 13''
16'' - }

17 -    Verstärkungselement

| | | |
|---|---|---|
| 18 - | | Aussparung des Hautfeldversteifungssockels zur Aufnahme des Verstärkungselementes |
| 19 - | | Hautfeldsteg |
| 20 - | | Durchbruch im Steg des Versteifungselementes |
| 21 - | | Laserstrahlachse |
| 22 - | | Zugentlastungselement |
| a - | | Abstand der Durchbrüche 15' bzw. 15" in den Schenkeln 1 und 2 |
| a' - | | Abstand der Durchbrüche 20 im Steg 4 |
| $b_{Hs}$ - | | Breite des Hautfeldsockels 11 |
| $b_{rs}$ - | | Breite des Hautfeldversteifungssockels 13, Abstand der beiden Schenkel 5 und 6 auf dem Hautfeldsockel |
| $b_s$ - | | Breite des Kopfes des Versteifungselementes, Stringerkopfbreite |
| $b_{s0}$ - | | Schenkeldicke in der Nähe der Verzweigung des Fußes des Versteifungselementes |
| $b_v$ - | | Sockelbreite des Verstärkungselementes 17 |
| c - | | Abstand des Hautfeldsteges von der Mittelinie des Versteifungselementes |
| $d_H$ - | | Hautblechdicke |
| $d_{Hs}$ - | | Dicke des Hautbleches einschließlich Hautfeldsockel |
| $d_{Hv}$ - | | Dicke des Hautbleches einschließlich Hautfeldversteifungssockel |
| $d_s$ - | | Dicke des Versteifungselementes, Stringerdicke, Spantdicke |
| F - | | Kraft auf Stringer infolge Biegemoment |
| $F_v$ - | | Kraft am Verzweigungspunkt infolge Biegemoment |
| $h_s$ - | | Höhe des Versteifungselementes, Stringerhöhe, Spanthöhe |
| $h_v$ - | | Höhe des Verstärkungselementes 17 |
| M - | | Biegemoment auf Stringer |
| R - | | Krümmungsradius des Hautbleches |
| $R_1$; $R_2$ - | | Spannungsabminderungsfaktoren in der Schweißnaht |
| r - | | Krümmungsradius des Überganges zwischen dem Steg des Versteifungselementes 4 und den beiden Schenkeln 5, 6 |
| $s_s$ - | | Schenkelhöhe |
| $t_s$ - | | Schenkeldicke in der Ebene der Fügezone, Anbindungstiefe der Schweißnaht |
| $\alpha$ - | | Winkel zwischen den beiden Schenkeln 5 und 6 |
| $\alpha_{KB}$ - | | Kerbformzahl für Biegebelastung |

$\alpha_{KZ}$ -        Kerbformzahl für Zugbelastung

$\alpha^r_{KB}$ -        Kerbformzahl für Biegebelastung am Ort der Schenkelverzweigung

$\beta$ -        Winkel zwischen der Fügefläche der Fügezone 7 bzw. 8 und Hautfeld 1

$\gamma$ -        Winkel zwischen Laserstrahlachse 21 und Hautblech 1

$\sigma^{(a,b,c)}_{Beff}$ -        effektive auf die Schweißnaht wirkende Biegespannung im Ausführungsfall (a, b, c)

$\sigma^{(a,b,c)}_{Zeff}$ -        effektive auf die Schweißnaht wirkende Zugspannung im Ausführungsfall (a, b, c)

$\sigma^{(a,b,c)0}_{Beff}$ -        effektive auf den Übergang zwischen dem Steg 4 des Versteifungselementes und den beiden Schenkel 5, 6 wirkende Biegespannung im Ausführungsfall (c)

**Patentansprüche**

1. Metallisches Leichtbau-Strukturbauteil insbesondere für Flugzeuge, bestehend aus mindestens einem Hautblech (1) und darauf längs oder quer oder längs und quer angeordneten Versteifungselementen (2), bestehend aus Fuß (3), Steg (4) und Kopf (12), die jeweils mit ihrem Fuß (3) stoffschlüssig vollständig oder zumindest teilweise mit dem Hautblech (1) verbunden sind, **dadurch gekennzeichnet, dass** der Steg (4) des Versteifungselementes (2) auf seiner dem Hautblech (1) zugewandten Seite aus zwei Schenkeln (5; 5', 6, 6') besteht, die beide mittels zweier getrennter, sich an den Fußflächen der beiden Schenkel (5, 6) befindlicher Fügezonen 1 und 2 (7, 8) stoffschlüssig mit dem Hautblech (1) verbunden sind.

2. Metallisches Leichtbau-Strukturbauteil nach Anspruch 1, **dadurch gekennzeichnet, dass** das Hautfeld (1) im Bereich der Anschlussstellen (9, 10) der Fügezonen (7, 8) eine Aufdickung in Form eines Hautfeldsockels (11) aufweist.

3. Metallisches Leichtbau-Strukturbauteil nach Anspruch 1 oder 2, **dadurch gekennzeichnet, dass** die Versteifungselemente (2) als längs verlaufende Stringer ausgebildet sind.

4. Metallisches Leichtbau-Strukturbauteil nach Anspruch 1 oder 2, **dadurch gekennzeichnet, dass** die Versteifungselemente (2) als in Umfangsrichtung verlaufende Spante ausgebildet sind.

5. Metallisches Leichtbau-Strukturbauteil nach Anspruch 1, **dadurch gekennzeichnet, dass** die getrennten Fügezonen (7, 8) Laserstrahlschweißzonen sind.

6. Metallisches Leichtbau-Strukturbauteil nach Anspruch 1, **dadurch gekennzeichnet, dass** die getrennten Fügezonen (7, 8) Rührreibschweißzonen sind.

7. Metallisches Leichtbau-Strukturbauteil nach Anspruch 1, **dadurch gekennzeichnet, dass** die getrennten Fügezonen (7, 8) geklebte Fügezonen sind.

8. Metallisches Leichtbau-Strukturbauteil nach den Ansprüchen 1 und 2, **dadurch gekennzeichnet, dass** sich zwischen den Innenflächen der Schenkel (5, 6) ein Hautfeldversteifungssockel (13) befindet, dessen Dicke $d_{Hv}$ größer ist, als die Dicke $d_{Hs}$ des Hautfeldsockels (11) und dessen Seitenflächen (16) so gestaltet sind, dass sie an den Innenflächen der Schenkel (5, 6) anliegen und die beiden Anschlussstellen der Fügezonen 1 und 2 (9, 10) so ausgeführt sind, dass sie bis an in die Seitenflächen (16) des Hautfeldversteifungssockels (13) ranreichen.

9. Metallisches Leichtbau-Strukturbauteil nach Anspruch 1, **dadurch gekennzeichnet, dass** die beiden Schenkel (5, 6) um einen Gesamtwinkel $\alpha$ abgewinkelt sind, so dass die Innenflächen der beiden Schenkel (5, 6) und die Oberfläche des Hautversteifungssockels (13) ein gleichschenkliges Dreieck bilden und der Gesamtwinkel $\alpha$ im Bereich $7° \leq \alpha \leq 50°$ liegt.

10. Metallisches Leichtbau-Strukturbauteil nach Anspruch 1, **dadurch gekennzeichnet, dass** für die Abmaße des Versteifungselementes (2) folgende Relationen gelten:

a) für das Verhältnis zwischen der Schenkeldicke in der Ebene der Fügezone 1 und 2 (7, 8) $t_s$ und der Dicke des Versteifungselementes $d_s$

$$0,5 \leq t_s/d_s \leq 1,8.$$

b) für das Verhältnis zwischen Schenkellänge $s_s$ und der Höhe des Versteifungselementes $h_s$

$$0,15 \leq s_s/h_s \leq 0,7$$

c) für das Verhältnis Schenkeldicke in der Nähe der Verzweigung der beiden Schenkel der Versteifungselemente $b_{so}$ und der Schenkeldicke in der Ebene der Fügezone $t_s$

$$0,28 \leq b_{so}/t_s \leq 1$$

d) für den Winkel β zwischen dem Hautfeld und der Fügefläche der Fügezone

$$0^0 \leq \beta \leq 25°.$$

11. Metallisches Leichtbau-Strukturbauteil nach Anspruch 1, **dadurch gekennzeichnet, dass** die beiden, sich auf der dem Hautblech zugewandten Seite des Steges (4) befindlichen Schenkel (5', 6') des Versteifungselementes (2) senkrecht oder nahezu senkrecht auf dem Hautblech (1) angeordnet sind und auf der dem Hautblech (1) abgewandten Seite so abgewinkelt sind, dass sie die Schenkel eines U-Profiles bilden.

12. Metallisches Leichtbau-Strukturbauteil nach den Ansprüchen 1 oder 11, **dadurch gekennzeichnet, dass** der Kopf (12') des Versteifungselementes (2) an beiden Seiten über die parallel verlaufenden Schenkel (5', 6') des U-Profils hinausragt.

13. Metallisches Leichtbau-Strukturbauteil nach den Ansprüchen 1, 11 oder 12, **dadurch gekennzeichnet, dass** die beiden über die Schenkel (5', 6') hinausreichenden Bereiche des Kopfes (12') des Versteifungselementes (2) je ein in Richtung Hautblech (1) zeigenden Randbereich aufweisen.

14. Metallisches Leichtbau-Strukturbauteil nach den Ansprüchen 1 oder 11, **dadurch gekennzeichnet, dass** der Hautfeldversteifungssockel (13', 13") geteilt ausgeführt ist und dass die beiden seitlichen Außenflächen des Hautfeldversteifungssockels (13', 13") an den Innenflächen der Schenkel (5', 6') anliegen.

15. Metallisches Leichtbau-Strukturbauteil nach den Ansprüchen 1 oder 8 oder 14, **dadurch gekennzeichnet, dass** die beiden Fügeflächen (9, 10) der Fügezonen (7, 8) und die Außenseiten (16, 16', 16") der Hautfeldversteifungssockel (13) oder (13', 13") eine spanend bearbeitete Oberfläche aufweisen.

16. Metallisches Leichtbau-Strukturbauteil nach Anspruch 1, **dadurch gekennzeichnet, dass** sich in den beiden Schenkeln (5, 6) Durchbrüche (15, 15") befinden, die in Abständen a entlang der Schenkel (5, 6) angeordnet sind.

17. Metallisches Leichtbau-Strukturbauteil nach den Ansprüchen 1 oder 16, **dadurch gekennzeichnet, dass** der Abstand der Berandung der Durchbrüche (15', 15") zu den Fügezonen (7, 8) größer ist, als das Anderthalbfache der Schenkeldicke $t_s$ in der Ebene der Fügezone.

18. Metallisches Leichtbau-Strukturbauteil nach den Ansprüchen 1 oder 16, **dadurch gekennzeichnet, dass** die Durchbrüche (15') und die Durchbrüche (15") um jeweils den Abstand a / 2 versetzt angeordnet sind.

19. Metallisches Leichtbau-Strukturbauteil nach den Ansprüchen 1 oder 16, **dadurch gekennzeichnet, dass** die Durchbrüche (15', 15") eine Kreiszylinderform aufweisen.

20. Metallisches Leichtbau-Strukturbauteil nach den Ansprüchen 1 oder 16, **dadurch gekennzeichnet, dass** die Durchbrüche (15', 15") die Form von gleichseitigen oder nahezu gleichseitigen Dreiecken mit abgerundeten Ecken aufweisen, wobei die Durchbrüche (15, 15") entlang der Schenkel (5, 6) oder (5', 6') so angeordnet sind, dass die Spitzen der Dreiecke abwechselnd in Richtung Hautfeld (1) und in Richtung Kopf des Versteifungselementes (12, 12') weisen.

21. Metallisches Leichtbau-Strukturbauteil nach den Ansprüchen 1 oder 8 oder 9, **dadurch gekennzeichnet, dass** auf beide Außenflächen der beiden Schenkel des Versteifungselementes (5, 6) oder (5', 6') ein Doppler aus einem schadenstoleranten faserverstärkten Laminat angebracht ist.

22. Metallisches Leichtbau-Strukturbauteil nach Anspruch 1, **dadurch gekennzeichnet, dass** sich innerhalb des Hautfeldsockels (11), symmetrisch zum Steg (4) des Versteifungselementes (2) und in der Nähe der Fügezonen (7, 8) ein bis fünf Zugentlastungselemente (22) befinden, die aus einem Werkstoff mit deutlich höherem Elastizitätsmodul und höherer Dauerschwingfestigkeit als der Werkstoff des Hautbleches (2) bestehen.

23. Metallisches Leichtbau-Strukturbauteil nach den Ansprüchen 1 oder 22, **dadurch gekennzeichnet, dass** die Zugentlastungselemente (22) aus hochfesten Drahtseilen bestehen.

24. Metallisches Leichtbau-Strukturbauteil nach den Ansprüchen 1, 8 oder 22, **dadurch gekennzeichnet, dass** sich ein Zugentlastungselement (22) direkt unter dem Hautfeldversteifungssockel (13) befindet.

25. Metallisches Leichtbau-Strukturbauteil nach den Ansprüchen 1, 8, 22 oder 24, **dadurch gekennzeichnet, dass** der Hautfeldversteifungssockel (13) aus dem beim Einwalzen des Zugentlastungselementes (22) zweckentsprechend umgeformten Material besteht.

26. Metallisches Leichtbau-Strukturbauteil nach den Ansprüchen 1 und 8, **dadurch gekennzeichnet, dass** sich in dem durch die beiden Schenkel (5, 6) und dem Hautfeldversteifungssockel (13) gebildeten Hohlraum ein Verstärkungselement (17) befindet, das aus einem hochfesten Werkstoff mit einem Elastizitätsmodul besteht, der größer ist, als der Elastizitätsmodul der Werkstoffe des Hautbleches (1) bzw. der Versteifungselemente (2) und das Verstärkungselement (17) kraft- oder formschlüssig mit den beiden Schenkeln (5, 6) und dem Hautfeldversteifungssockel (13) verbunden ist.

27. Metallisches Leichtbau-Strukturbauteil nach den Ansprüchen 1, 8 und 26, **dadurch gekennzeichnet, dass** ein kombinierter Kraft- und Formschluss realisiert ist, indem die Oberfläche des Verstärkungselementes (17) eine Aufrauung oder eine Oberflächenprofilierung aufweist, deren Abdruck sich auf den beiden Innenflächen der beiden Schenkel (5, 6) und auf der Oberfläche des Hautfeldversteifungssockels (13) befindet.

28. Metallisches Leichtbau-Strukturbauteil nach den Ansprüchen 1, 8 und 26, **dadurch gekennzeichnet, dass** der durch die beiden Schenkel (5, 6) und den Hautfeldversteifungssockel (13) gebildete Hohlraum und der Querschnitt des Verstärkungselementes (17) ein gleiches gleichschenkliges Dreieck mit einer abgerundeten Spitze bilden.

29. Metallisches Leichtbau-Strukturbauteil nach den Ansprüchen 1, 8 und 26, **dadurch gekennzeichnet, dass** das Verstärkungselement (17) als Draht oder Rohr ausgebildet ist, der Hautfeldversteifungssockel (13) als Kreisabschnitt mit dem Draht- oder Rohrdurchmesser ausgeführt ist und die Verzweigung der beiden Schenkel (5, 6) am Fuß (3) des Versteifungselementes (2) so ausgebildet werden, dass sie den Draht oder das Rohr mit einem Umschlingungswinkel von ca. 180° umschließen und die beiden Schenkel (5; 6) parallel zueinander liegen, wobei der Abstand ihrer beiden Innenflächen dem Durchmesser des Drahtes oder Rohres entspricht.

30. Metallisches Leichtbau-Strukturbauteil nach den Ansprüchen 1, 8 und 26, **dadurch gekennzeichnet, dass** der Hautfeldversteifungssockel (13) eine Aussparung (18) zur Aufnahme des Verstärkungselementes (17) enthält.

31. Metallisches Leichtbau-Strukturbauteil nach den Ansprüchen 1, 8 und 26, **dadurch gekennzeichnet, dass** der Steg (4) oder die Schenkel (5, 6) des Versteifungselementes (2) Durchbrüche (20, 15', 15") aufweisen, die in Abständen a entlang des Steges (4) oder entlang der Schenkel (5, 6) angeordnet sind.

32. Metallisches Leichtbau-Strukturbauteil nach den Ansprüchen 1, 8, 26 oder 31, **dadurch gekennzeichnet, dass** die Durchbrüche (20, 15', 15") kreisförmig ausgebildet sind.

33. Metallisches Leichtbau-Strukturbauteil nach den Ansprüchen 1, 8, 26 und 31, **dadurch gekennzeichnet, dass** die Durchbrüche (20, 15', 15") die Form von gleichseitigen oder nahezu gleichseitigen Dreiecken mit abgerundeten Ecken aufweisen, wobei die Dreiecke entlang des Steges (4) oder der beiden Schenkel (5, 6) so angeordnet sind, dass eine Spitze der Dreiecke abwechselnd in Richtung Hautfeld (1) und in Richtung Kopf des Versteifungselementes (12) weist.

34. Metallisches Leichtbau-Strukturbauteil nach den Ansprüchen 1, 8 und 26 **dadurch gekennzeichnet, dass** sich innerhalb des Hautfeldsockels (11) symmetrisch zum Steg (4) des Versteifungselementes (2) und in der Nähe der Fügezonen (7, 8) zwei oder vier Zugentlastungselemente befinden, die aus einem Werkstoff mit deutlich höherem Elastizitätsmodul und höherer Dauerschwingfestigkeit als der Werkstoff des Hautbleches (2) bestehen.

35. Metallisches Leichtbau-Strukturbauteil nach den Ansprüchen 1, 8, 26 oder 34, **dadurch gekennzeichnet, dass** die Zugentlastungselemente (22) aus hochfesten Drahtseilen bestehen.

36. Leichtbau-Strukturbauteil nach Anspruch 1, **dadurch gekennzeichnet, dass** sich auf dem Hautfeld (1) parallel oder senkrecht oder parallel und senkrecht zu den Verstärkungselementen (2) Hautfeldstege (19) befinden.

37. Metallisches Leichtbau-Strukturbauteil nach den Ansprüchen 1 oder 36, **dadurch gekennzeichnet, dass** die Höhe der Hautfeldstege (19) der Höhe der Hautfeldversteifungssockel (13) entspricht und der Abstand der Versteifungselemente (2) auf dem Hautblech (1) ein ganzzahliges Vielfaches des Abstandes c der Hautfeldstege (19) ist.

38. Metallisches Leichtbau-Strukturbauteil nach Anspruch 1, **dadurch gekennzeichnet, dass** der Kopf des Versteifungselementes (12) symmetrisch ausgeführt und mittig auf dem Steg (4) des Versteifungselementes (2) angeordnet ist.

39. Verfahren zur Herstellung eines metallischen Leichtbau-Strukturbauteils, insbesondere für Flugzeuge wie es in Anspruch 1 oder einem der diesem Anspruch untergeordneten Ansprüche beschrieben ist, **dadurch gekennzeichnet, dass** das Fügen der beiden Fußflächen 1 und 2 (7, 8) mittels zweier getrennter Fügezonen in einer Einspannung unter zumindest lokaler mechanischer Spannung, die senkrecht zu den Fußflächen wirkt, erfolgt.

40. Verfahren nach Anspruch 39, **dadurch gekennzeichnet, dass** das Fügen durch ein Laserstrahlschweißen erfolgt.

41. Verfahren nach den Ansprüchen 39 oder 40, **dadurch gekennzeichnet, dass** zum Laserstrahlschweißen der Laserstrahlfokus dergestalt geformt wird, dass er in Vorschubrichtung gestreckt oder in zwei Teilstrahlen aufgeteilt ist.

42. Verfahren nach Anspruch 39, **dadurch gekennzeichnet, dass** das Fügen durch ein Rührreibschweißen vorgenommen wird.

43. Verfahren nach Anspruch 39, **dadurch gekennzeichnet, dass** das Fügen durch ein Kleben erfolgt.

44. Verfahren nach Anspruch 39 oder einem der Ansprüche 40, 41 oder 43, **dadurch gekennzeichnet, dass** das Fügen der beiden Schenkel (5, 6) bzw. (5', 6') des Versteifungselementes (2) mit dem Hautblech (1) beidseitig gleichzeitig erfolgt.

45. Verfahren nach Anspruch 39 oder einem der Ansprüche 40 oder 42, **dadurch gekennzeichnet, dass** die beiden Schenkel (5, 6) bzw. (5', 6') des Versteifungselementes (2) einseitig nacheinander mit dem Hautblech (1) gefügt werden.

46. Verfahren nach Anspruch 39, **dadurch gekennzeichnet, dass** die beiden Schenkel (5, 6) bzw. (5', 6') mit Hilfe und während des Strangpressens ausgebildet werden.

47. Verfahren nach den Ansprüchen 39 oder 46, **dadurch gekennzeichnet, dass** für den Fall, dass das Versteifungselement (2) ein Spant ist, der Spant (2) mit einem solchen Radius stranggepresst wird, dass der Radius, den die beiden Unterseiten der Schenkel (5, 6) bzw. (5', 6') aufweisen, dem Radius der Innenseite des Hautfeldsockels (11) entspricht.

**48.** Verfahren nach den Ansprüchen 39 oder 46, **dadurch gekennzeichnet, dass** das Versteifungselement (2) konventionell stranggepresst wird und die beiden Schenkel (5, 6) durch ein nachfolgendes Spalten mittels Drückwalzen erzeugt wird.

**49.** Verfahren nach Anspruch 39, **dadurch gekennzeichnet, dass** vor dem Fügen die Verstärkungselemente (17) zwischen die Schenkel (5, 6) des Versteifungselementes (2) oder in die Aussparung (18) des Hautfeldversteifungssockels eingepresst werden und durch mechanische Umformung eine form- oder kraftschlüssige Verbindung zwischen dem Verstärkungselement (17), den Schenkeln des Versteifungselementes (2) und dem Hautfeldversteifungssockel (13) hergestellt wird.

**50.** Verfahren nach den Ansprüchen 39 oder 49, **dadurch gekennzeichnet, dass** die mechanische Umformung durch ein Einwalzen erfolgt.

**51.** Verfahren nach den Ansprüchen 39 oder 49, **dadurch gekennzeichnet, dass** die kraft- und/oder formschlüssige Verbindung zwischen Versteifungselement (2) und Verstärkungselement (17) durch Koextrudieren erzeugt wird.

**52.** Verfahren nach den Ansprüchen 39 oder 49, **dadurch gekennzeichnet, dass** die mechanische Umformung zur Erzeugung der kraft- und/oder formschlüssigen Verbindung zwischen Versteifungselement (2) und Verstärkungselement (17) durch die Spanntechnik direkt vor dem Fügeprozess oder im Vorlauf zum Fügeprozess bewirkt wird.

**Claims**

**1.** A metal lightweight structural element, in particular for aircraft, consisting of at least one skin panel (1) and stiffening elements (2) arranged on it longitudinally or transversely, or longitudinally and transversely, consisting of a base (3), web (4), and head (12), which are each fully or at least partially solidly bonded to the skin panel (1) with their base (3), **characterised in that** the web (4) of the stiffening element (2), on its side facing towards the skin panel (1), consists of two limbs (5; 5', 6, 6'), both of which are solidly bonded to the skin panel (1) by means of two separate joining zones 1 and 2 (7, 8) located on the base surfaces of the two limbs (5, 6).

**2.** The metal lightweight structural element according to Claim 1, **characterised in that** the skin panel (1) has a thickened section, in the form of a skin panel base (11), in the region of the connection points (9, 10) of the joining zones (7, 8).

**3.** The metal lightweight structural element according to Claim 1 or 2, **characterised in that** the stiffening elements (2) are designed as stringers running longitudinally.

**4.** The metal lightweight structural element according to Claim 1 or 2, **characterised in that** the reinforcing elements (2) are designed as bays running in the peripheral direction.

**5.** The metal lightweight structural element according to Claim 1, **characterised in that** the separate joining zones (7, 8) are laser beam welded zones.

**6.** The metal lightweight structural element according to Claim 1, **characterised in that** the separate joining zones (7, 8) are contact friction welded zones.

**7.** The metal lightweight structural element according to Claim 1, **characterised in that** the separate joining zones (7, 8) are glued joining zones.

**8.** The metal lightweight structural element according to Claims 1 and 2, **characterised in that** a skin panel stiffening base (13) is located between the inner faces of the limbs (5, 6), the thickness $d_{Hv}$ of which base is greater than the thickness $d_{Hs}$ of the panel skin base (11), and the lateral faces (16) of which base rest on the inner faces of the limbs (5, 6) and **in that** the two connection points of the joining zones 1 and 2 (9, 10) are designed so that they extend into the lateral faces (16) of the skin panel stiffening base (13).

**9.** The metal lightweight structural element according to Claim 1, **characterised in that** the two limbs (5, 6) are angled at a total angle $\alpha$ so that the inner faces of the two limbs (5, 6) and the surface of the skin stiffening base (13) form an isosceles triangle and the total angle $\alpha$ lies within the range $7° \leq \alpha \leq 50°$.

10. The metal lightweight structural element according to Claim 1, **characterised in that** the following relations relate to the dimensions of the stiffening element (2):

a) for the ratio of the limb thickness in the plane of the joining zone 1 and 2 (7, 8) $t_s$ to the thickness of the stiffening element $d_s$

$$0.5 \leq t_s/d_s \leq 1.8;$$

b) for the ratio of the limb length $s_s$ to the height of the stiffening element $h_s$

$$0.15 \leq s_s/h_s \leq 0.7$$

c) for the ratio of the limb thickness in the vicinity of the bifurcation of the two limbs of the stiffening element $b_{so}$ to the limb thickness in the plane of the joining zone $t_s$

$$0.28 \leq b_{so}/t_s \leq 1$$

d) for the angle $\beta$ between the skin panel and the joining surface of the joining zone

$$0° \leq \beta \leq 25°.$$

11. The metal lightweight structural element according to Claim 1, **characterised in that** the two limbs (5', 6') of the stiffening element (2) are located on the side of the web (4) facing towards the skin panel are arranged vertically or almost vertically on the skin panel (1), and are angled on the side facing away from the skin panel (1) so that they form the limbs of a U-profile.

12. The metal lightweight structural element according to Claims 1 or 11, **characterised in that** the head (12') of the stiffening element (2) projects on both sides from the parallel running limbs (5' 6') of the U-profile.

13. The metal lightweight structural element according to Claims 1, 11 of 12, **characterised in that** the two regions of the head (12') of the stiffening element (2) projecting from the limbs (5', 6') each have an edge region pointing in the direction of the skin panel (1).

14. The metal lightweight structural element according to Claims 1 or 11, **characterised in that** the skin panel stiffening base (13', 13") has a split design, and **in that** the two lateral outer faces of the skin panel stiffening base (13', 13") rest on the inner faces of the limbs (5', 6').

15. The metal lightweight structural element according to Claims 1 or 8 or 14, **characterised in that** the two joining surfaces (9, 10) of the joining zones (7, 8) and the external sides (16, 16', 16") of the skin panel stiffening base (13) or (13', 13") have a cutting machined surface.

16. The metal lightweight structural element according to Claim 1, **characterised in that** openings 15', 15") are provided in the two limbs (5, 6), which openings are arranged at intervals a along the limbs (5, 6).

17. The metal lightweight structural element according to Claims 1 or 16, **characterised in that** the distance from the edge of the openings (15', 15") to the joining zones (7, 8) is greater than one and a half times the limb thickness $t_s$ in the plane of the joining zone.

18. The metal lightweight structural element according to Claims 1 or 16, **characterised in that** the openings (15') and the openings (15") are arranged offset relative to each other by the distance a/2.

19. The metal lightweight structural element according to Claims 1 or 16, **characterised in that** the openings (15', 15") have the shape of a regular cylinder.

20. The metal lightweight structural element according to Claims 1 or 16, **characterised in that** the openings (15', 15") have the shape of isosceles or almost isosceles triangles with rounded vertices, wherein the openings (15', 15") are arranged along the limbs (5, 6) or (5', 6') so that the vertices of the triangles point alternately in the direction of the skin panel (1) and in the direction of the head of the stiffening element (12, 12').

21. The metal lightweight structural element according to Claims 1 or 8 or 9, **characterised in that** a doubling element of a damage-tolerant fibre-reinforced laminate is fitted on both outer faces of the two limbs of the stiffening element (5, 6) or (5', 6').

22. The metal lightweight structural element according to Claim 1, **characterised in that** one to five tension relief elements (22) are located inside the skin panel base (11), symmetrical to the web (4) of the stiffening element (2) and in the vicinity of the joining zones (7, 8), which elements consist of a material with a far higher modulus of elasticity and a higher endurance limit than the material of the skin panel (2).

23. The metal lightweight structural element according to Claims 1 or 22, **characterised in that** the tension relief elements (22) consist of high strength wire ropes.

24. The metal lightweight structural element according to Claims 1, 8 or 22, **characterised in that** a tension relief element (22) is located immediately underneath the skin panel stiffening base (13).

25. The metal lightweight structural element according to Claims 1, 8, 22 or 24, **characterised in that** the skin panel stiffening base (13) consists of the material suitably transformed when the tension relief element (22) is rolled in.

26. The metal lightweight structural element according to Claims 1 and 8, **characterised in that** a reinforcing element (17) is located in the cavity formed by the two limbs (5, 6) and the skin panel stiffening base (13), which reinforcing element consists of a high strength material with a modulus of elasticity that is greater than the modulus of elasticity of the materials of the skin panel (1) or the reinforcing elements (2) and **in that** the reinforcing element (17) is connected non-positively and positively to the two limbs (5, 6) and the skin panel stiffening base (13).

27. The metal lightweight structural element according to Claims 1, 8 and 26, **characterised in that** a combined non-positive and positive connection by providing the surface of the surface of the reinforcing element (17) with roughening or surface profiling, the imprint of which is located on both inner faces of the two limbs (5, 6) and on the surface of the skin panel reinforcing base (13).

28. The metal lightweight structural element according to Claims 1, 8 and 26, **characterised in that** the cavity formed by the two limbs (5, 6) and the skin panel stiffening base (13) and the cross-section of the reinforcing element (17) form the same isosceles triangle with a rounded vertex.

29. The metal lightweight structural element according to Claims 1, 8 and 26, **characterised in that** the reinforcing element (17) is designed as a wire or tube, the skin panel stiffening base (13) as a circulation with the wire or tube diameter, and **in that** the bifurcation of the two limbs (5, 6) are formed on the base (3) of the stiffening element (2) so that they enclose the wire or tube with an angle of contact of approx. 180°, and the two limbs (5; 6) lie parallel with each other, wherein the distance between both their inner faces is equal to the diameter of the wire or tube.

30. The metal lightweight structural element according to Claims 1, 8 and 26, **characterised in that** the skin panel stiffening base (13) contains a recess (18) for receiving the reinforcing element (17).

31. The metal lightweight structural element according to Claims 1, 8 and 26, **characterised in that** the web (4) or the limbs (5, 6) of the stiffening element (2) have openings (20, 15', 15") which are arranged at intervals a along the web (4) or along the limbs (5, 6).

32. The metal lightweight structural element according to Claims 1, 8, 26 or 31, **characterised in that** the openings (20, 15', 15") are of circular design.

33. The metal lightweight structural element according to Claims 1, 8, 26 and 31, **characterised in that** the openings (20, 15', 15") have the shape of isosceles or almost isosceles triangles with rounded vertices, wherein the triangles are arranged along the web (4) or the two limbs (5, 6) so that a vertex of the triangles points alternately in the direction of the skin panel (1) and in the direction of the head of the stiffening element (12).

34. The metal lightweight structural element according to Claims 1, 8 and 26, **characterised in that** two or more tension relief elements are located inside the skin panel base (11) symmetrically to the web (4) of the stiffening element (2) and in the vicinity of the joining zones (7, 8), which tension relief elements consist of a material with a much higher modulus of elasticity and a higher endurance limit than the material of the skin panel (2).

35. The metal lightweight structural element according to Claims 1, 8, 26 or 34, **characterised in that** the tension relief elements (22) consist of high strength wire ropes.

36. The lightweight structural element according to Claim 1, **characterised in that** skin panel webs (19) are located on the skin panel (1) parallel or perpendicular or parallel and perpendicular to the reinforcing elements (2).

37. The metal lightweight structural element according to Claims 1 or 36, **characterised in that** the height of the skin panel webs (19) is equal to the height of the skin panel stiffening base (13) and the distance between the stiffening elements (2) on the skin panel (1) is a whole number multiple of distance c between the skin panel webs (19).

38. The metal lightweight structural element according to Claim 1, **characterised in that** the head of the stiffening element (12) is of a symmetrical design and is arranged centrally on the web (4) of the stiffening element (2).

39. A method for manufacturing a metal lightweight structural element, in particular for aircraft, as described in Claim 1 or one of the claims dependent on this claim, **characterised in that** the joining of the two base surfaces 1 and 2 (7, 8) is carried out by means of two separate joining zones in a clamp under at least local mechanical stress which acts perpendicularly to the base surfaces.

40. The method according to Claim 39, **characterised in that** the joining is carried out by laser beam welding.

41. The method according to Claims 39 or 40, **characterised in that** for laser beam welding the laser beam focus is shaped so that it is stretched in the feed direction or is divided into two partial beams.

42. The method according to Claim 39, **characterised in that** the joining is carried out by contact friction welding.

43. The method according to Claim 39, **characterised in that** the joining is carried out by gluing.

44. The method according to Claim 39 or one of Claims 40, 41 or 43, **characterised in that** the two limbs (5, 6) or (5', 6') of the stiffening element (2) are joined to the skin panel (1) simultaneously on both sides.

45. The method according to Claim 39 or one of Claims 40 or 42, **characterised in that** the two limbs (5, 6) or (5', 6') of the stiffening element (2) are joined to the skin panel (1) unilaterally one after the other.

46. The method according to Claim 39, **characterised in that** the two limbs (5, 6) or (5', 6') are formed by means of and during extrusion.

47. The method according to Claims 39 or 46, **characterised in that** if the stiffening element (2) is a bay, the bay (2) is extruded with such a radius that the radius of the two undersides of the limbs (5, 6) or (5' 6') is equal to the radius of the inside of the skin panel base (11).

48. The method according to Claims 39 or 46, **characterised in that** the stiffening element (2) is conventionally extruded and both limbs (5, 6) are produced by subsequent splitting by means of pressure rolls.

49. The method according to Claim 39, **characterised in that** before joining the reinforcing elements (17) are pressed between the limbs (5, 6) of the stiffening element (2) or into the recess (18) of the skin panel stiffening base, and a non-positive or positive connection is made by mechanical transformation between the reinforcing element (17), the limbs of the stiffening element (2) and the skin panel stiffening base (13).

50. The method according to Claims 39 or 49, **characterised in that** the mechanical transformation is carried out by a rolling in operation.

**51.** The method according to Claims 39 or 49, **characterised in that** the non-positive and/or positive connection between the stiffening element (2) and the reinforcing element (17) is made by co-extrusion.

**52.** The method according to Claims 39 or 49, **characterised in that** the mechanical transformation for making the non-positive and/or positive connection between the stiffening element (2) and the reinforcing element (17) is carried out immediately before the joining process or ahead of the joining process.

**Revendications**

**1.** Elément de structure métallique de construction légère, prévu notamment pour des avions, composé au minimum d'un panneau (1) avec des éléments raidisseurs (2) disposés le long ou en travers du panneau, ou bien le long et en travers du panneau, composés d'un pied (3), d'une âme (4) et d'une tête (12) et intégralement ou partiellement reliés au panneau (1) par leurs pieds (3), **caractérisé en ce que** l'âme (4) de l'élément raidisseur (2) comporte deux branches (5 ; 5', 6 ; 6') du côté tourné vers le panneau, reliées au panneau (1) par deux zones d'assemblage 1 et 2 (7, 8) séparées, situées au niveau des surfaces de pieds des deux branches (5, 6).

**2.** Elément de structure métallique de construction légère selon la revendication 1, **caractérisé en ce que** le panneau (1) comporte une surépaisseur en forme de socle de panneau (11) au niveau des points de liaison (9, 10) des zones d'assemblage (7, 8).

**3.** Elément de structure métallique de construction légère selon la revendication 1 ou 2, **caractérisé en ce que** les éléments raidisseurs (2) sont formés par des serres orientées dans la longueur.

**4.** Elément de structure métallique de construction légère selon la revendication 1 ou 2, **caractérisé en ce que** les éléments raidisseurs (2) sont formés par des couples orientés vers la périphérie.

**5.** Elément de structure métallique de construction légère selon la revendication 1, **caractérisé en ce que** les zones d'assemblage séparées (7, 8) sont des zones de soudage par rayons laser.

**6.** Elément de structure métallique de construction légère selon la revendication 1, **caractérisé en ce que** les zones d'assemblage séparées (7, 8) sont des zones de soudage par friction.

**7.** Elément de structure métallique de construction légère selon la revendication 1, **caractérisé en ce que** les zones d'assemblage séparées (7, 8) sont des zones d'assemblage par collage.

**8.** Elément de structure métallique de construction légère selon les revendications 1 et 2, **caractérisé par** un socle de fortification du panneau (13) situé entre les faces internes des branches (5, 6), dont l'épaisseur $d_{HV}$ est supérieure à l'épaisseur $d_{HS}$ du socle de panneau (11) et dont les faces latérales (16) sont conçues de manière à être en contact avec les surfaces internes des branches (5, 6), les deux points de liaison des zones d'assemblage 1 et 2 (9, 10) étant conçues de manière à atteindre les faces latérales (16) du socle de fortification du panneau (13).

**9.** Elément de structure métallique de construction légère selon la revendication 1, **caractérisé en ce que** les deux branches (5, 6) sont arrondies par un angle commun $\alpha$, de manière à ce que les faces internes des deux branches (5, 6) et la surface du socle de fortification du panneau (13) forment ensemble un triangle isocèle et à ce que l'angle commun $\alpha$ se situe entre $7° \leq \alpha \leq 50°$.

**10.** Elément de structure métallique de construction légère selon la revendication 1, **caractérisé en ce que** les relations suivantes s'appliquent aux dimensions de l'élément raidisseur (2) :

a) Rapport entre l'épaisseur $t_s$ des branches au niveau des zones d'assemblage 1 et 2 (7, 8) et l'épaisseur $d_s$ de l'élément raidisseur

$$0,5 \leq t_s/d_s \leq 1,8$$

b) Rapport entre la longueur de branche $s_s$ et la hauteur $h_s$ de l'élément raidisseur

$$0,15 \leq s_s/h_s \leq 0,7$$

c) Rapport entre l'épaisseur $b_{so}$ des branches à proximité de la ramification des deux branches de l'élément raidisseur et l'épaisseur $t_s$ des branches au niveau de la zone d'assemblage ts

$$0,28 \leq b_{so}/t_s \leq 1$$

d) Angle $\beta$ entre le panneau et la surface d'assemblage de la zone d'assemblage

$$0° \leq \beta \leq 25°$$

**11.** Elément de structure métallique de construction légère selon la revendication 1, **caractérisé en ce que** les deux branches (5', 6') de l'élément raidisseur (2), situées du côté de l'âme qui est tourné vers le panneau, sont disposées de façon verticale ou presque sur le panneau (1) et arrondies du côté opposé au panneau (1) de manière à former un profil en U.

**12.** Elément de structure métallique de construction légère selon la revendication 1 ou 11, **caractérisé en ce que** la tête (12') de l'élément raidisseur (2) dépasse des deux côtés des branches parallèles (5', 6') du profil en U.

**13.** Elément de structure métallique de construction légère selon les revendications 1, 11 ou 12, **caractérisé en ce que** les deux têtes de l'élément raidisseur (2) dépassant des branches (5', 6') comportent chacune un bord orienté vers le panneau (1).

**14.** Elément de structure métallique de construction légère selon revendications 1 ou 11, **caractérisé en ce que** le socle de fortification du panneau (13', 13") se ramifie et **en ce que** les deux faces latérales externes du socle de fortification du panneau (13', 13") sont en contact avec les faces internes des branches (5', 6').

**15.** Elément de structure métallique de construction légère selon la revendication 1, 8 ou 14, **caractérisé en ce que** les deux surfaces d'assemblage (9, 10) des zones d'assemblage (7, 8) ainsi que les faces externes (16, 16', 16") des socles de fortification du panneau (13) ou (13', 13") comportent une surface usinée à sec.

**16.** Elément de structure métallique de construction légère selon la revendication 1, **caractérisé en ce que** des percées (15', 15") sont disposées le long des branches (5, 6) avec un écart a.

**17.** Elément de structure métallique de construction légère selon les revendications 1 ou 16, **caractérisé en ce que** l'écart entre le bord des percées (15', 15") et les zones d'assemblage (7, 8) est une fois et demi supérieure à l'épaisseur $t_s$ des branches au niveau de la zone d'assemblage.

**18.** Elément de structure métallique de construction légère selon la revendication 1 ou 16, **caractérisé en ce que** les percées (15') et les percées (15") sont décalées d'un écart a/2.

**19.** Elément de structure métallique de construction légère selon la revendication 1 ou 16, **caractérisé en ce que** les percées (15', 15") ont une forme cylindrique circulaire.

**20.** Elément de structure métallique de construction légère selon la revendication 1 ou 16, **caractérisé en ce que** les percées (15', 15") ont la forme de triangles isocèles ou presque, avec des coins arrondis, les percées (15', 15") le long des branches (5, 6) ou (5', 6') sont disposées de telle façon que les coins des triangles sont orientés alternativement vers le panneau (1) et vers la tête de l'élément raidisseur (12, 12').

**21.** Elément de structure métallique de construction légère selon la revendication 1, 8 ou 9, **caractérisé en ce qu'**un doubleur en laminé renforcé de fibres et résistant aux dommages est intégré sur chacune des deux faces externes des deux branches de l'élément raidisseur (5, 6) ou (5', 6').

22. Elément de structure métallique de construction légère selon la revendication 1, **caractérisé par** un à cinq éléments de décharge de tension (22) situés à proximité des zones d'assemblage (7, 8) à l'intérieur du socle de panneau (11), de façon symétrique par rapport à l'âme (4) de l'élément raidisseur (2), qui se composent d'un matériau possédant un enrobage à module nettement plus élevé et une meilleure résistance à la fatigue que le matériau du panneau (2).

23. Elément de structure métallique de construction légère selon la revendication 1 ou 22, **caractérisé en ce que** les éléments de décharge de tension (22) se composent de câbles métalliques ultra-solides.

24. Elément de structure métallique de construction légère selon la revendication 1, 8 ou 22, **caractérisé en ce qu'**un élément de décharge de tension se trouve directement sous le socle de fortification du panneau (13).

25. Elément de structure métallique de construction légère selon la revendication 1, 8 ou 22, **caractérisé en ce que** le socle de fortification du panneau (13) se compose du matériau transformé à cet effet lors de l'intégration de l'élément de décharge de tension (22).

26. Elément de structure métallique de construction légère selon les revendications 1 et 8, **caractérisé par** un élément de renforcement (17) situé dans l'espace creux formé par les deux branches (5, 6) et le socle de fortification du panneau (13), et réalisé à partir d'un matériau très résistant avec un enrobage à module supérieur à celui du matériau formant le panneau (1) ou les éléments raidisseurs (2), et en ce que l'élément de renforcement (17) est relié par la forme ou la puissance aux deux branches (5, 6) ainsi qu'au socle de fortification du panneau (13).

27. Elément de structure métallique de construction légère selon les revendications 1, 8 et 26, **caractérisé par** une connexion par ajustement ou par friction, en ajoutant des rugosités ou un profilage sur la surface de l'élément de renforcement (17), dont l'empreinte se trouve sur les deux faces internes des deux branches (5, 6) ainsi que sur la surface du socle de fortification du panneau (13).

28. Elément de structure métallique de construction légère selon les revendications 1, 8 et 26, **caractérisé en ce que** l'espace creux formé par les deux branches (5, 6) et le socle de fortification du panneau (13) forme, ensemble avec la section transversale de l'élément de renforcement (17), un triangle isocèle possédant un coin arrondi.

29. Elément de structure métallique de construction légère selon les revendications 1, 8 et 26, **caractérisé en ce que** l'élément de renforcement (17) est constitué d'un câble ou d'un tuyau, **en ce que** le socle de fortification du panneau (13) possède une section de forme circulaire avec le diamètre du câble ou du tuyau, et **en ce que** les deux branches (5, 6) au pied (3) de l'élément raidisseur (2) sont formées de manière à entourer le câble ou tuyau avec un angle d'enroulement de 180° et que les deux branches (5, 6) soient parallèles l'une par rapport à l'autre, l'écart entre leurs deux faces internes correspondant au diamètre du câble ou tuyau.

30. Elément de structure métallique de construction légère selon les revendications 1, 8 et 26, **caractérisé en ce que** le socle de fortification du panneau (13) comporte une entaille (18) servant de logement pour l'élément de renforcement (17).

31. Elément de structure métallique de construction légère selon les revendications 1, 8 et 26, **caractérisé par** des percées (20, 15', 15") dans l'âme (4) ou dans les branches (5, 6) de l'élément raidisseur (2), disposés le long de l'âme (4) ou des branches (5, 6) en respectant des écarts de a.

32. Elément de structure métallique de construction légère selon les revendications 1, 8, 26 ou 31, **caractérisé en ce que** les percées (20, 15', 15") ont une forme circulaire.

33. Elément de structure métallique de construction légère selon les revendications 1, 8, 26 ou 31, **caractérisé en ce que** les percées (20, 15', 15") ont une forme de triangles isocèles ou presque avec des coins arrondis, les triangles étant disposés le long de l'âme (4) ou des deux branches (5, 6), de façon à ce qu'une pointe de triangle soit orientée alternativement vers le panneau (1) ou vers la tête de l'élément raidisseur (12).

34. Elément de structure métallique de construction légère selon les revendications 1, 8 et 26, **caractérisé par** deux ou quatre éléments de décharge de tension situés à proximité des zones d'assemblage (7, 8) à l'intérieur du socle de panneau (11), disposés de façon symétrique par rapport à l'âme (4) de l'élément raidisseur (2) et composés d'un matériau à module d'élasticité nettement plus élevé et à plus haute résistance à la fatigue que le matériau formant le panneau (2).

**35.** Elément de structure métallique de construction légère selon les revendications 1, 8, 26 ou 34, **caractérisé en ce que** les éléments de décharge de tension (22) sont composés de câbles d'acier ultra-solides.

**36.** Elément de structure en construction légère selon la revendication 1, **caractérisé par** des âmes de panneau (19) disposées de façon parallèle ou perpendiculaire ou bien de façon parallèle et perpendiculaire aux éléments raidisseurs (2).

**37.** Elément de structure métallique de construction légère selon la revendication 1 ou 36, **caractérisé en ce que** la hauteur des âmes de panneau (19) correspond à la hauteur du socle de fortification du panneau (13) et **en ce que** l'écart entre les éléments raidisseurs (2) sur le panneau (1) représente un chiffre entier multiple de l'écart c entre les âmes de panneau (19).

**38.** Elément de structure métallique de construction légère selon la revendication 1, **caractérisé en ce que** la tête de l'élément raidisseur (12) est disposée de façon symétrique et centrale sur l'âme (4) de l'élément raidisseur (2).

**39.** Procédé pour la fabrication d'un élément de structure métallique de construction légère particulièrement adapté aux avions, tel que décrit dans la revendication 1 ou dans des revendications annexes, **caractérisé en ce que** le soudage des deux surfaces de pied 1 et 2 (7, 8) se fait au moyen de deux zones d'assemblage séparées dans un bridage, avec une tension au moins locale agissant perpendiculairement aux surfaces de pieds.

**40.** Procédé selon la revendication 39, **caractérisé en ce que** le soudage est effectué au moyen de rayons laser.

**41.** Procédé selon la revendication 39 ou 40, **caractérisé en ce que** le point focal du rayon laser est conçu de façon à être étiré dans le sens du déplacement ou bien divisé en deux moitiés de rayon.

**42.** Procédé selon la revendication 39, **caractérisé en ce que** le soudage est effectué par friction.

**43.** Procédé selon la revendication 39, **caractérisé en ce que** le soudage est effectué par collage.

**44.** Procédé selon la revendication 39 ou selon l'une des revendications 40, 41 ou 43, **caractérisé en ce que** le soudage des deux branches (5, 6) ou (5', 6') de l'élément raidisseur (2) avec le panneau (1) s'effectue de façon bilatérale.

**45.** Procédé selon la revendication 39 ou selon l'une des revendications 40 ou 42, **caractérisé en ce que** les deux branches (5, 6) ou (5', 6') de l'élément raidisseur(2) sont assemblées de façon unilatérale et consécutive avec le panneau (1).

**46.** Procédé selon la revendication 39, **caractérisé en ce que** les deux branches (5, 6) ou (5', 6') sont formées par et pendant l'extrusion.

**47.** Procédé selon la revendication 39 ou 46, **caractérisé en ce que** dans le cas où l'élément raidisseur (2) serait formé par un couple, le couple (2) est extrudé avec un tel rayon, que le rayon formé par les deux faces inférieures des branches (5, 6) ou (5', 6') correspond au rayon de la face interne du socle de panneau (11).

**48.** Procédé selon la revendication 39 ou 46, **caractérisé en ce que** l'élément raidisseur (2) est extrudé de façon conventionnelle et **en ce que** les deux branches (5, 6) sont fabriquées par laminage et par ramification.

**49.** Procédé selon la revendication 39, **caractérisé en ce que** les éléments de renforcement (17) sont pressés entre les branches (5, 6) de l'élément raidisseur (2) ou dans l'entaille (18) du socle de fortification du panneau avant l'assemblage, et **en ce qu'**une connexion par ajustement ou par friction est réalisée entre l'élément de renforcement (17), les branches de l'élément raidisseur (2) et le socle de fortification du panneau (13), sous l'effet d'une déformation mécanique.

**50.** Procédé selon la revendication 39 ou 49, **caractérisé en ce que** la déformation mécanique s'effectue par laminage.

**51.** Procédé selon la revendication 39 ou 49, **caractérisé en ce que** la connexion par ajustement et/ou par friction entre l'élément raidisseur (2) et l'élément de renforcement (17) est effectuée par extrusion commune.

**52.** Procédé selon la revendication 39 ou 49, **caractérisé en ce que** la déformation mécanique servant à réaliser la connexion entre l'élément raidisseur (2) et l'élément de renforcement (17), par ajustement ou par friction, se fait juste avant le processus d'assemblage ou au début, au moyen d'une technique par tension.

12

2

4

3

5

7

14

6

8

11

9

10

1

Fig.1

EP 1 439 121 B1

Fig.2

a)

$\sigma^{a}_{B\,eff}$

F

M

$h_s$

b)

$(\sigma^{b}_{B\,eff} + \sigma^{b}_{z\,eff})$

$\sigma^{b0}_{B\,eff}$

F

M

$h_s$

c)

$(\sigma^{c}_{z\,eff}\,;\quad \sigma^{c}_{B\,eff} = 0)$

$F_v$

$\sigma^{c0}_{B\,eff}$

F

M

$r$

$S_s$

$h_s$

Fig.3

Fig.4a

Fig.4b

Fig.5

Fig.6

Fig.7

Fig.8

Fig. 9

Fig. 10

Fig. 11